# EUROPEAN PATENT APPLICATION

(11) **EP 4 524 913 A1**
(43) Date of publication of application: **19.03.2025**
(21) Application number: 24195817.2
(22) Date of filing: 22.08.2024
(51) Int. Cl.: G06V 30/413, G06V 30/19

(54) **INFORMATION PROCESSING APPARATUS, INFORMATION PROCESSING METHOD, AND PROGRAM**

(30) Priority: 31.08.2023 JP 2023140773
(71) Applicant: CANON KABUSHIKI KAISHA, Tokyo 146-8501 (JP)
(72) Inventor: HIROHANA, Chiharu, Tokyo (JP)
(74) Representative: WESER & Kollegen Patentanwälte PartmbB

(57) **Abstract**

Provided is an information processing apparatus including: a character recognition unit configured to perform a character recognition process on an image of a processing target document (154); a generation unit configured to generate an instruction message based on a result of the character recognition process(155), the instruction message being a message for causing a large language model to reply a document type of the processing target document; a transmission unit configured to transmit the instruction message in order to obtain a reply to the instruction message from the large language model(155, S316); and a reception unit configured to receive the reply to the instruction message from the large language model (156).

## Description

### BACKGROUND

### Field

The present disclosure relates to processing for extracting information from a document image.

### Description of the Related Art

There is a technique for determining the document type of an input document image. There are methods to determine document types, such as invoices, estimate forms, and delivery notes, that use a trained model obtained via machine learning with multiple document images.

Japanese Patent Laid-Open No. 2017-107455 discloses a method in which a classifier capable of performing classification into learned document types (trained model) is used to determine the document type of an input document image. In Japanese Patent Laid-Open No. 2017-107455, reliability of each of multiple document types is calculated for an input document image and, in a case where there is a document type with reliability greater than a first threshold value, the input document image is classified as that document type. Moreover, in a case where there are multiple document types with reliability lower than or equal to the first threshold value and greater than a second threshold value, those document types are presented as candidate categories, and the user's designation of the correct document type is accepted. Japanese Patent Laid-Open No. 2017-107455 further discloses that the user's designation of a new document type can be accepted in a case where there is no document type with reliability above the second threshold value.

Here, with the technique of Japanese Patent Laid-Open No. 2017-107455, the user needs to input a new document type in the case where there is no document type with reliability greater than the second threshold value. This requires the user to take time and effort to input a character string indicating the new document type.

Also, additional training usually requires collection of a large amount of similar data and training time. For this reason, every time a trained model fails to classify a new document type, the user will need to correct the selection by, for example, inputting the new document type or selecting an appropriate document type from among multiple options until the trained model can classify the new document type. This imposes a large load on the user.

### SUMMARY

The present invention in its first aspect provides an information processing apparatus as specified in claims 1 to 16.

The present invention in its second aspect provides an information processing method as specified in claim 17.

The present invention in its third aspect provides program as specified in claim 18.

Further features of the present disclosure will become apparent from the following description of exemplary embodiments with reference to the attached drawings.

### BRIEF DESCRIPTION OF THE DRAWINGS

Fig. 1 is a diagram illustrating an example of a configuration of an information processing system;
Figs. 2A to 2C are diagrams illustrating an example of hardware configurations of apparatuses included in the information processing system;
Figs. 3A and 3B are diagrams of sequences by the information processing system;
Fig. 4 is a flowchart describing details of a process of generating machine learning models;
Fig. 5 is a flowchart describing details of a process of displaying a document type to the user;
Fig. 6 is a flowchart describing details of a document analysis process by the machine learning models;
Figs. 7A and 7B are diagrams illustrating examples of a processing target document image;
Fig. 8 is a flowchart describing details of a process of obtaining a reply from a large language model;
Figs. 9A to 9E are diagrams for describing an instruction message;
Figs. 10A to 10D are diagrams illustrating examples of a document type confirmation screen;
Fig. 11 is a diagram illustrating a sequence by an information processing system;
Figs. 12A and 12B are diagrams illustrating an option setting screen and a document type confirmation screen;
Fig. 13 is a flowchart describing details of a process of displaying a document type to the user;
Fig. 14 is a flowchart describing details of a process of obtaining a reply from a large language model;
Figs. 15A and 15B are diagrams for describing an instruction message;
Fig. 16 is a diagram of a sequence by an information processing system;
Figs. 17A and 17B are diagrams illustrating a setting screen and a document type confirmation screen;
Fig. 18 is a flowchart describing details of a process of displaying a document type to the user;
Fig. 19 is a flowchart describing details of a process of obtaining a reply from a large language model;
Fig. 20 is a diagram illustrating an example of a configuration of an information processing system;
Figs. 21A and 21B are diagrams illustrating sequences by the information processing system;
Figs. 22A to 22C are diagrams illustrating a setting screen and a document type confirmation screen;
Fig. 23 is a flowchart describing details of a process of displaying a document type to the user; and
Fig. 24 is a flowchart describing details of a document analysis process by a machine learning model.

### DESCRIPTION OF THE EMBODIMENTS

Embodiments of the technique of the present disclosure will be described below using the drawings. Note that the components described in the following embodiments are exemplary and are not intended to limit the technical scope of the present disclosure.

### <Embodiment 1>

### [Configuration of Information Processing System]

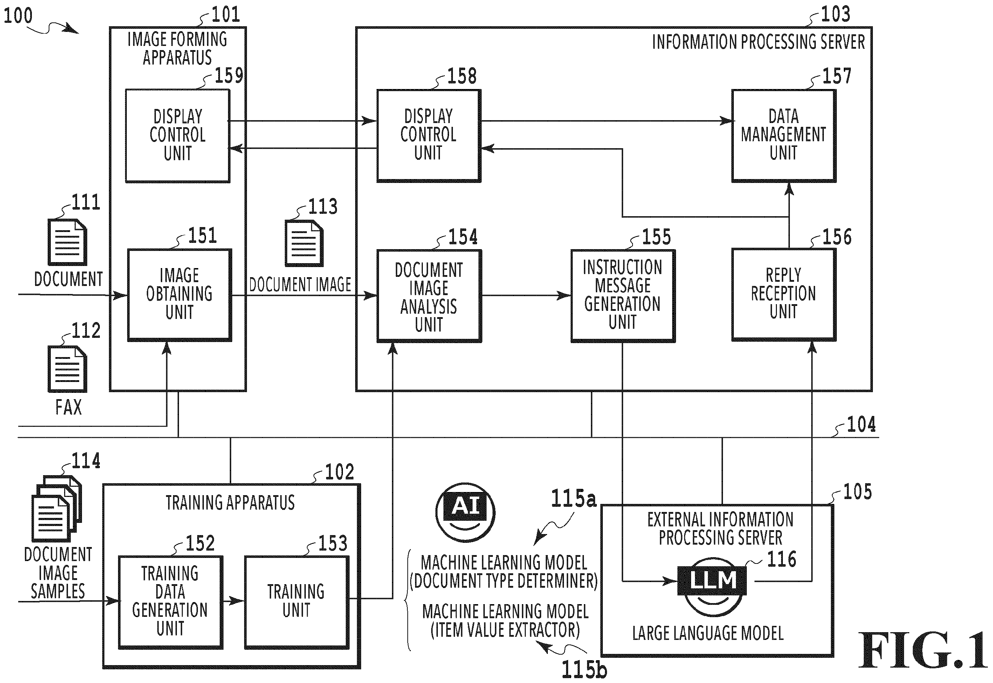

Fig. 1 is a diagram illustrating an example of a configuration of an information processing system 100 in Embodiment 1. The information processing system 100, for example, has an image forming apparatus 101, a training apparatus 102, and an information processing server 103, and an external information processing server 105, which are connected to one another through a network 104. The information processing system 100 may be configured such that the image forming apparatus 101, the training apparatus 102, and the information processing server 103 each have multiple connections to the network 104, instead of a single connection. For example, the configuration may be such that the information processing server 103 includes a first server apparatus having a high-speed computation resource and a second server apparatus having a high-volume storage, which are connected to each other through the network 104.

The image forming apparatus 101 is implemented with a multi-function peripheral (MFP) having multiple functions such as printing, scanning, and faxing, for example. The image forming apparatus 101 has at least an image obtaining unit 151 and a display control unit 159 as functional units.

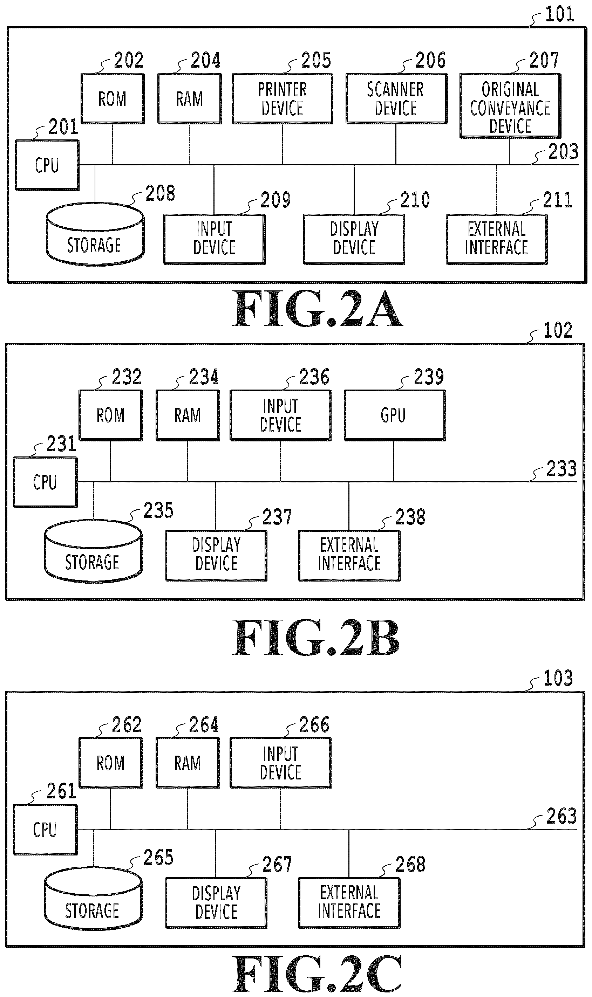

The image forming apparatus 101 has a scanner device 206 (see Fig. 2A). The scanner device 206 optically reads an original 111, or a document, being a print medium, such as paper, on which character strings are printed, and the image obtaining unit 151 performs predetermined image processing on the data thus obtained to obtain a document image 113 as a scanned image. Alternatively, the image obtaining unit 151, for example, receives fax data 112 transmitted from a fax transmitter not illustrated and performs predetermined fax image processing to obtain the document image 113. The image obtaining unit 151 transmits the obtained document image 113 to the information processing server 103.

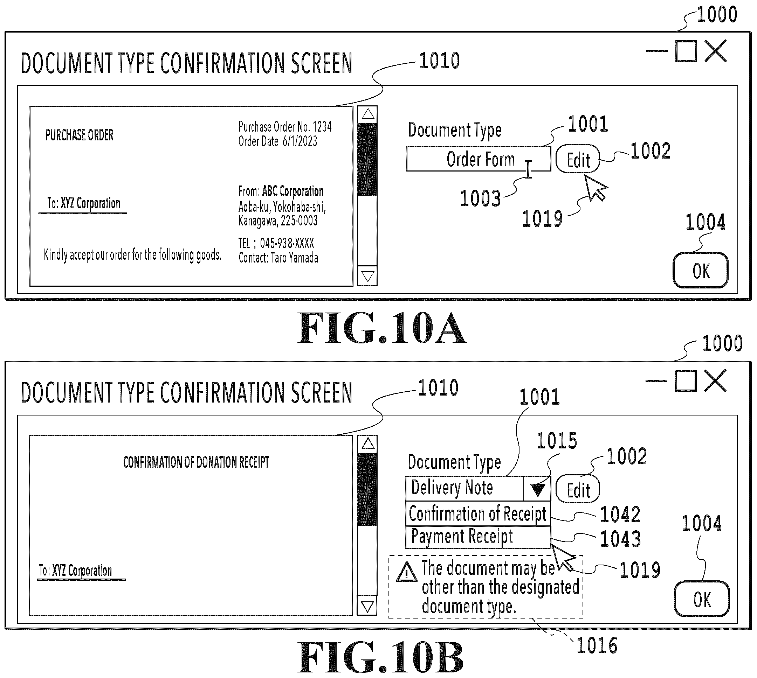

The display control unit 159 displays information received from the information processing server 103 on a display of a display device 210 (see Fig. 2A). The display control unit 159 displays a document type confirmation screen 1000 (see Figs. 10A to 10D) to be described later, for example.

The image forming apparatus 101 may be configured to be implemented with a personal computer (PC) or the like, instead of an MFP having scanning and faxing functions. For example, the document image 113 in a format such as PDF or JPEG generated using a document creation application that runs on the PC may be transmitted as a processing target to the information processing server 103.

The training apparatus 102 has a training data generation unit 152 and a training unit 153 as functional units.

The training data generation unit 152 generates training data based on multiple document image samples 114.

The training unit 153 generates trained models (machine learning models) by training learning models based on the training data generated by the training data generation unit 152. In the present embodiment, the training unit 153 generates a document type determiner 115a as a machine learning model that outputs information as a result indicating the type of the document represented by a processing target document image (document type). The training unit 153 also generates an item value extractor 115b as a machine learning model that outputs information as a result indicating character strings corresponding to items which are included in a processing target document image (this character strings are called item values).

The training apparatus 102 transmits the generated machine learning models to the information processing server 103 through the network 104. Details of processing by the training apparatus 102 will be described later. The following description will be given on the assumption that the document type determiner 115a and the item value extractor 115b in the present embodiment are trained models generated by machine learning, but they may be ones that make determinations with rule-based algorithms and output results.

The information processing server 103 is an apparatus that performs processes on the processing target document image 113 input thereto and transmits the results of the processes to the image forming apparatus 101. The information processing server 103 has a document image analysis unit 154, an instruction message generation unit 155, a reply reception unit 156, a data management unit 157, and a display control unit 158 as functional units.

The document image analysis unit 154 receives the document image 113 transmitted from the image forming apparatus 101 and executes an optical character recognition (OCR) process on the document image 113 to obtain a group of character strings recognized from the document image 113.

Using the document type determiner 115a, the document image analysis unit 154 determines which one of preset document types, such as an invoice, an estimate form, an order form, and a delivery note, the document type represented by the document image 113 is. Also, using the item value extractor 115b, the document image analysis unit 154 extracts character strings (item values) corresponding to items such as a title, a document number, an issuance date, company names, and prices among the group of character strings recognized from the document image 113. The name of an item will be referred to as "item name". Also, a character string corresponding to an item will be referred to as "item value".

The instruction message generation unit 155 obtains the item values from the document image analysis unit 154 and inserts a predetermined item value into an instruction message template prepared in advance to generate an instruction message. The instruction message generation unit 155 transmits the instruction message through the network 104 so that the instruction message will be input into the external information processing server 105. Instead of or in addition to the item values, the instruction message generation unit 155 may obtain the group of character strings recognized from the document image 113 from the document image analysis unit 154 as information to be inserted into the instruction message template. Details of the instruction message will be described later.

The reply reception unit 156 receives a reply to the instruction message output by the large language model 116.

The data management unit 157 stores and manages the reply to the instruction message generated by the large language model 116 in a storage unit. The data management unit 157 also stores and manages the document type of the document image 113 confirmed by the user through the document type confirmation screen 1000 in the storage unit.

The display control unit 158 performs control for displaying the document type determined by the document image analysis unit 154 and the reply to the instruction message obtained from the large language model 116 to the user. The display control unit 158 generates information for displaying the later-described document type confirmation screen 1000 (see Figs. 10A to 10D) to display it on a display unit, for example. In a case where the user designates correction of the document type determined by the document image analysis unit 154, the display control unit 158 accepts that correction and generates a document type confirmation screen 1000 corresponding to the user's correction.

The external information processing server 105 is an apparatus that utilizes a large language model 116. The large language model 116 is a model called LLM (Large Language Model) capable of generating sentences in an interactive manner, and generates replies to input instruction messages (prompts). For example, ChatGPT (registered trademark), Bard (filed trademark), and so on have been known as LLMs.

The large language model 116 is accessed by application programming interfaces (APIs) through the network 104. The large language model 116 outputs a reply to the instruction message input from the information processing server 103 as an output result. The external information processing server 105 may be a component present in the same vendor's another system or a component present in an external vendor's system. Note that the large language model 116 may be a component present in the information processing server 103 or a component with some of its functions and and/or devices present in the information processing server 103.

The network 104 is implemented as a local area network (LAN), a wide area network (WAN), or the like, and is a communication unit that connects the image forming apparatus 101, the training apparatus 102, the information processing server 103, and the external information processing server 105 to one another for data communication between these apparatuses.

### [Hardware Configuration of Image Forming Apparatuses]

Figs. 2A to 2C are diagrams illustrating an example of the hardware configurations of the image forming apparatus 101, the training apparatus 102, and the information processing server 103 included in the information processing system 100.

Fig. 2A is a diagram illustrating the hardware configuration of the image forming apparatus 101. As illustrated in Fig. 2A, the image forming apparatus 101 has a central processing unit (CPU) 201, a read-only memory (ROM) 202, a random-access memory (RAM) 204, a printer device 205, a scanner device 206, an original conveyance device 207, and a storage 208. The image forming apparatus 101 further has an input device 209, the display device 210, and an external interface 211. These components are connected to one another through a data bus 203.

The CPU 201 is a control unit that comprehensively controls the operation of the image forming apparatus 101. The CPU 201 boots the system of the image forming apparatus 101 by executing a boot program stored in the ROM 202, and implements functions of the image forming apparatus 101 such as printing, scanning, and faxing by executing a control program stored in the storage 208.

The ROM 202 is a storage unit implemented with a non-volatile memory, and stores the boot program that boots the image forming apparatus 101. The data bus 203 is a communication unit for performing data communication between constituent devices of the image forming apparatus 101. The RAM 204 is a storage unit implemented with a volatile memory, and is used as a work memory in a case where the CPU 201 executes the control program.

The printer device 205 is an image output device, and prints a document image on a print medium, such as paper, and outputs it. The scanner device 206 is an image input device, and optically reads a print medium such as a sheet of paper on which characters, figures, charts, and/or the like are printed. The data obtained by the reading by the scanner device 206 is obtained as a document image. The original conveyance device 207 is implemented with an auto-document feeder (ADF) or the like, and detects an original placed on platen glass and conveys the detected original to the scanner device 206 sheet by sheet. The storage 208 is a storage unit implemented with a hard disk drive (HDD) or the like, and stores the control program and the document image mentioned above.

The input device 209 is an operation unit implemented with a touch panel, hardware keys, and the like, and accepts input of operations from the user of the image forming apparatus 101. The display device 210 is a display unit implemented with a liquid crystal display or the like, and displays setting screens and the like of the image forming apparatus 101 to the user. The external interface 211 is an interface that connects the image forming apparatus 101 to the network 104, and receives fax data from a fax transmitter not illustrated and transmits document images to the information processing server 103, for example.

### [Hardware Configuration of Training Apparatus]

Fig. 2B is a diagram illustrating the hardware configuration of the training apparatus 102. As illustrated in Fig. 2B, the training apparatus 102 has a CPU 231, a ROM 232, a RAM 234, a storage 235, an input device 236, a display device 237, an external interface 238, and a graphics processing unit (GPU) 239. Each components are connected to one another through a data bus 233.

The CPU 231 is a control unit that comprehensively controls the operation of the training apparatus 102. The CPU 231 executes a boot program stored in the ROM 232 to boot the system of the training apparatus 102 and execute a training program stored in the storage 235 to generate machine learning models for determining the document type and extracting item values. The ROM 232 is a storage unit implemented with a non-volatile memory, and stores the boot program that boots the training apparatus 102. The data bus 233 is a communication unit for performing data communication between constituent devices of the training apparatus 102. The RAM 234 is a storage unit implemented with a volatile memory, and is used as a work memory in a case where the CPU 231 executes the training program.

The storage 235 is a storage unit implemented with an HDD or the like, and stores the training program mentioned above, and document image samples. The input device 236 is an operation unit implemented with a mouse, a keyboard, and the like, and accepts input of operations of the engineer who controls the training apparatus 102. The display device 237 is a display unit implemented with a liquid crystal display or the like, and displays setting screens and the like of the training apparatus 102 to the engineer.

The external interface 238 is an interface that connects the training apparatus 102 and the network 104 and externally receives the document image samples 114 and transmits the machine learning models to the information processing server 103. The GPU 239 is a computation unit composed of an image processing processor. The GPU 239 executes computation for generating the machine learning models based on groups of character strings included in given document images in accordance with a control command given from the CPU 231, for example.

The CPU 231 implements the functional units included in the training apparatus 102 illustrated in Fig. 1 by executing a predetermined program, but the present embodiment is not limited to this manner. Alternatively, for example, hardware such as the GPU 239, which is for speeding up computation, or a field programmable gate array (FPGA) not illustrated may be utilized. Each functional unit may be implemented by software and hardware, such as a dedicated IC, cooperating with each other, or some or all of the functions may be implemented solely with hardware.

### [Hardware Configuration of Information Processing Server]

Fig. 2C is a diagram illustrating the hardware configuration of the information processing server 103. As illustrated in Fig. 2C, the information processing server 103 has a CPU 261, a ROM 262, a RAM 264, a storage 265, an input device 266, a display device 267, and an external interface 268, which are connected to one another through a data bus 263.

The CPU 261 is a control unit that comprehensively controls the operation of the information processing server 103. The CPU 261 executes a boot program stored in the ROM 262 to boot the system of the information processing server 103 and execute an information processing program stored in the storage 265 to execute information processing such as character recognition (OCR) and information extraction.

The ROM 262 is a storage unit implemented with a non-volatile memory, and stores the boot program that boots the information processing server 103. The data bus 263 is a communication unit for performing data communication between constituent devices of the information processing server 103. The RAM 264 is a storage unit implemented with a volatile memory, and is used as a work memory in a case where the CPU 261 executes the information processing program. The storage 265 is a storage unit implemented with a HDD or the like, and stores the information processing program mentioned above, the machine learning models, document images, determined document types, extracted item values, and the like.

The input device 266 is an operation unit implemented with a mouse, a keyboard, and the like, and accepts input of operations on the information processing server 103 from the user of the information processing server 103 or its engineer. The display device 267 is a display unit implemented with a liquid crystal display or the like, and displays setting screens of the information processing server 103 to the user of the information processing server 103 or its engineer.

The external interface 268 is an interface that connects the information processing server 103 and the network 104, and receives the machine learning models from the training apparatus 102 and document images from the image forming apparatus 101, for example.

The CPU 261 implements the functional units included in the information processing server 103 in Fig. 1 by executing a predetermined program, but the present embodiment is not limited to this manner. Alternatively, for example, hardware such as a GPU for speeding up computation or an FPGA may be utilized. Each functional unit may be implemented by software and hardware, such as a dedicated IC, cooperating with each other, or some or all of the functions may be implemented solely with hardware.

### [Sequence for Generating Trained Models]

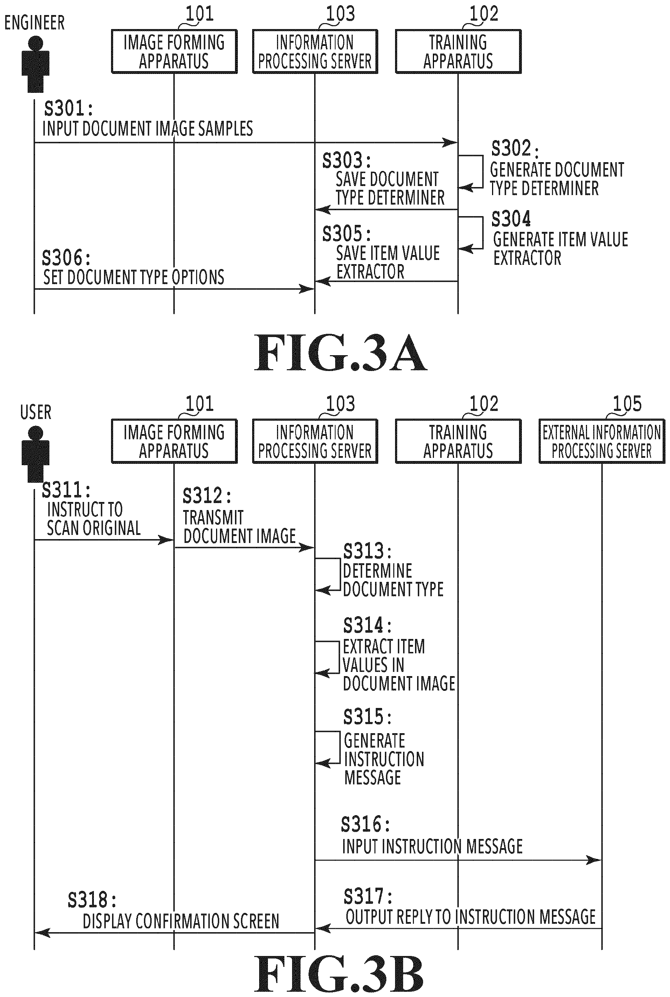

Figs. 3A and 3B are diagrams illustrating sequences by the information processing system 100. The symbol "S" in the description of each process means a step in the sequence. This applies also to the subsequent flowcharts. Also, operations by the user and the engineer are described as steps as well for the sake of description.

Fig. 3A illustrates a flow of development of the document type determiner 115a and the item value extractor 115b, which are machine learning models, by the engineer.

In S301, the engineer of the information processing system 100 inputs the multiple document image samples 114, which are samples of images representing documents, into the training apparatus 102. The document image samples 114 are document images corresponding to document types such as an invoice, an estimate form, an order form, and a delivery note.

In S302, the training data generation unit 152 of the training apparatus 102 generates first training data based on the document image samples 114, and the training unit 153 generates the document type determiner 115a, which is a machine learning model, by performing machine learning with the first training data.

In S303, the training apparatus 102 transmits the generated document type determiner 115a to the information processing server 103. The information processing server 103 saves the document type determiner 115a in the storage 265.

In S304, the training data generation unit 152 of the training apparatus 102 generates second training data based on the document image samples 114, and the training unit 153 generates the item value extractor 115b, which is a machine learning model, by performing machine learning with the second training data.

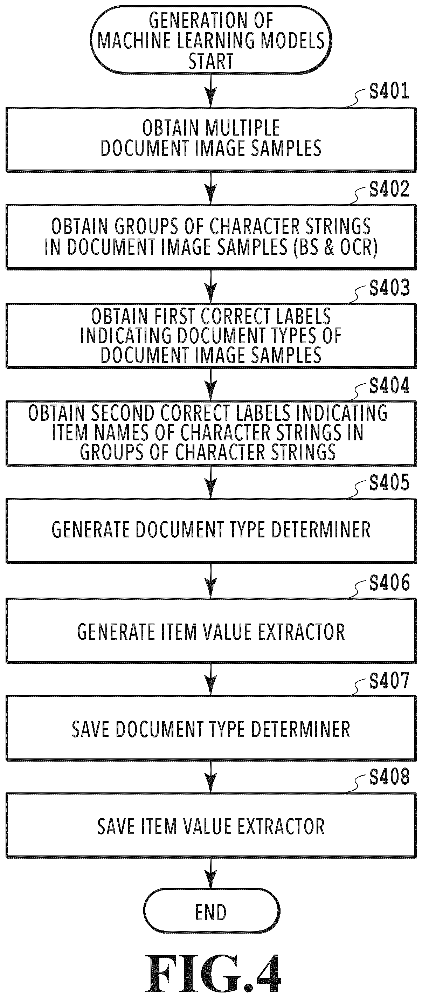

In S305, the training apparatus 102 transmits the generated item value extractor 115b to the information processing server 103. The information processing server 103 saves the item value extractor 115b in the storage 265. Details of S302 to S305 in Fig. 3A will be described later using Fig. 4.

In S306, the engineer inputs the document types of the document image samples input in S301 as "document type options" into the information processing server 103. In the present embodiment, the document type options set by the engineer will not be set again by the user. The document type options will be described later.

### [Sequence of Process of Determining Document Type]

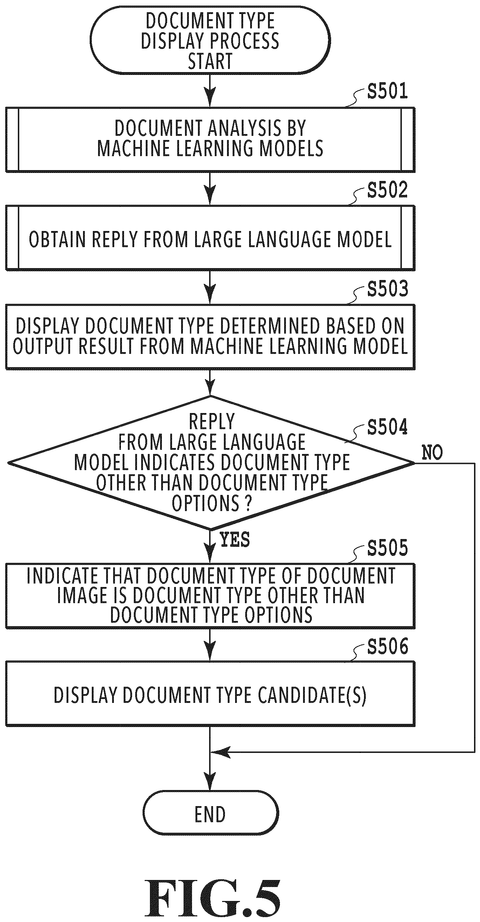

Fig. 3B is a diagram describing a flow of a process of determining the document type represented by a processing target document image. Details of S313 to S316 and S318 in Fig. 3B, which are processes by the information processing server 103, will be described later using Fig. 5.

In S311, the user sets a paper document (original) on the image forming apparatus 101 and instructs the image forming apparatus 101 to scan the document.

In S312, the scanner device 206 of the image forming apparatus 101 reads the set paper document, and the image obtaining unit 151 generates a document image being an image representing the scanned document. The image obtaining unit 151 then transmits the generated document image as a processing target document image to the information processing server 103.

The document image analysis unit 154 of the information processing server 103 executes a character recognition process (OCR process) on the processing target document image transmitted in S312 and obtains a group of character strings recognized from the document image.

In S313, the document image analysis unit 154 inputs data of the group of character strings in the processing target document image into the document type determiner 115a, and determines the document type of the processing target document image by using the output result from the document type determiner 115a.

In S314, the document image analysis unit 154 inputs the data of the group of character strings recognized from the processing target document image into the item value extractor 115b to extract character strings (item values) corresponding to given items out of the group of character strings.

In S315, the instruction message generation unit 155 generates an instruction message by using the item values extracted in S314. Details of the instruction message will be described later.

In S316, the information processing server 103 transmits the instruction message generated in S315 to the external information processing server 105.

In S317, the external information processing server 105 receives the instruction message transmitted in S316, and causes the large language model 116 to generate a reply to the received instruction message. The reply to the instruction message is returned to the information processing server 103.

In S318, the display control unit 158 of the information processing server 103 converts the document type determined in S313 based on the output result from the document type determiner 115a and the reply to the instruction message transmitted in S317 into information to be presented to the user. The display control unit 158 transmits the information obtained by the conversion to the image forming apparatus 101. The display control unit 159 of the image forming apparatus 101 displays the document type confirmation screen 1000 (see Figs. 10A to 10D) to present the processing result to the user.

### [Process of Generating Machine Learning Models]

Fig. 4 is a flowchart describing details of the process of generating the document type determiner 115a and the item value extractor 115b in S302 to S305 in Fig. 3A executed by the training apparatus 102. The following description will be given on the assumption that the CPU 231 of the training apparatus 102 performs the series of processes illustrated in the flowchart of Fig. 4 by loading program code stored in the ROM 232 or the storage 235 to the RAM 234 and executing it. The functions of some or all of the steps in Fig. 4 may be implemented with GPU239, or hardware such as an application-specific integrated circuit (ASIC) or an electronic circuit.

In S401, the CPU 231 obtains the multiple document image samples input by the engineer in S301 in Fig. 3A. For example, the CPU 231 obtains document image samples created by issuance source companies with their own different layouts, which are generally called semi-standardized forms, such as invoices, estimate forms, and order forms.

In S402, the CPU 231 executes a block selection (BS) process and a character recognition process (OCR process) on each document image sample obtained in S401 to obtain a group of character strings recognized from the document image sample.

The block selection (BS) process is a process of selecting block regions in a document image in such a manner as to segment the document image based on objects forming the document image, and determining each block region's attribute. Specifically, it is a process of determining attributes, such as characters, pictures, figures, and charts, and segmenting the document image into block regions with different attributes, for example. The block selection (BS) process can be implemented using a publicly known region determination technique.

The data of the group of character strings obtained as a result of the OCR process may be, for example, character strings separated on a word-by-word basis that form the document image and are arranged in the document image so as to be spaced from one another and separated by ruled lines, and that are read out continuously in a predetermined reading order based on layout information. Also, the data of the group of character strings obtained may be, for example, character strings separated on a word-by-word basis that are obtained by separating the sentences forming the document image by a morphological analysis method and read out continuously in a predetermined reading order based on layout information.

In S403, the CPU 231 obtains a first correct label indicating the document type of each of the multiple document image samples obtained in S401. The document type is, for example, an invoice, an estimate form, an order form, a delivery note, or the like. The first correct label obtained may be a label manually given to the document sample by the engineer, or a document type automatically obtained by inputting the document image sample into an already-generated model that outputs a document type. The CPU 231 generates first training data as data for machine learning which is a combination of the group of character strings recognized from the document image sample and the first correct label of the document image sample. The first training data is generated for each of the multiple document samples.

In S404, the CPU 231 obtains a second correct label indicating which item corresponds to the character string to be extracted among the groups of character strings obtained in S402.
The item is, for example, a title, a document number, an issuance date, a company name, a total price, or the like. The second correct label may be manually given by the engineer or automatically given by inputting the document image sample into an already-generated model that extracts item values. The CPU 231 then generates second training data which is a combination of the group of character strings recognized from the document image sample and data being the character strings representing item values among the group of character strings and the second correct labels given to these character strings. The second training data is generated for each of the multiple document samples.

In S405, the CPU 231 generates the document type determiner 115a, which is a machine learning model, by machine learning using the first training data. The document type determiner 115a is a trained model that, in response to receiving data of feature amounts of the group of character strings included in a processing target document image, outputs information of the document type of the processing target document image from among learned document types.

Suppose that the engineer has input document image samples of five document types "invoice", "estimate form", "order form", "delivery note", and "contractual document" into the training apparatus 102. In this case, generated in S405 is a document type determiner 115a which outputs information of the document type of a processing target document image from among the five document types "invoice", "estimate form", "order form", "delivery note", and "contractual document". In that case, in S306 in Fig. 3A, the engineer sets the five document types "invoice", "estimate form", "order form", "delivery note", and "contractual document" as document type options. Thus, the "document type options" in the present embodiment represent learned document types which the document type determiner 115a can output.

The document type determiner 115a in the present embodiment is a trained model trained to be capable of outputting labels corresponding to the first correct labels, for example. The document type determiner 115a is generated by, for example, training a prepared learning model to output a preset document type label corresponding to the feature amounts of an input group of character strings as an estimation result.

In S406, the CPU 231 generates the item value extractor 115b, which is a machine learning model, by machine learning using the second training data. The item value extractor 115b is a trained model trained to output information of character strings (item values) corresponding to given items from among a group of character strings included in a processing target document image in response to receiving data of feature amounts of that group of character strings.

The item value extractor 115b in the present embodiment is a trained model trained to be capable of outputting labels corresponding to the second correct labels, for example. The item value extractor 115b is generated by training a prepared learning model to output item labels for extraction target character strings and output no labels for non-extraction target character strings in response to receiving the feature amounts of a group of character strings.

Incidentally, publicly known methods may be used to generate the document type determiner 115a and the item value extractor 115b. For example, feature vectors indicating feature amounts of character strings which are converted using Word2Vec, fastText, BERT, XLNet, ALBERT, or the like, the positional coordinates at which those character strings are disposed in the document image, and so on may be used. Specifically, for example, a BERT language model that has been trained in advance with general sentences (e.g., entire articles in Wikipedia) can be used to convert a single piece of character string data into a feature vector expressed by a 768-dimensional numerical value. For the learning model, a generally known machine learning algorithm, such as a logistic regression, a decision tree, a random forest, a support vector machine, or a neural network, may be used. Specifically, based on the output value of a fully connected layer in a neural network having received a feature vector output by a BERT language model, it is possible to output one of preset document types and the label of item information as estimation results, for example.

In S407, the CPU 231 transmits the generated document type determiner 115a to the information processing server 103. The document type determiner 115a is then saved in the storage 265 in the information processing server 103.

In S408, the CPU 231 transmits the generated item value extractor 115b to the information processing server 103. The item value extractor 115b is then saved in the storage 265 in the information processing server 103.

In the above description, the document type determiner 115a and the item value extractor 115b are generated as trained models independent of each other. Alternatively, a learning model can be trained so as to generate a single trained model that determines the document type and extracts item values simultaneously.

### [Process of Displaying Document Type]

Fig. 5 is a flowchart describing details of the processes of S313 to S316 and S318, in which the information processing server 103 determines the document type represented by a processing target document image and displays the determined document type to the user. The CPU 261 of the information processing server 103 performs the series of processes illustrated in the flowchart of Fig. 5 by loading program code stored in the ROM 262 or the storage 265 to the RAM 264 and executing it. Alternatively, the functions of some or all of the steps in Fig. 5 may be implemented with hardware such as an ASIC or an electronic circuit.

In S501, the CPU 261 performs a document analysis on the processing target document image by using the document type determiner 115a and the item value extractor 115b, which are machine learning models.

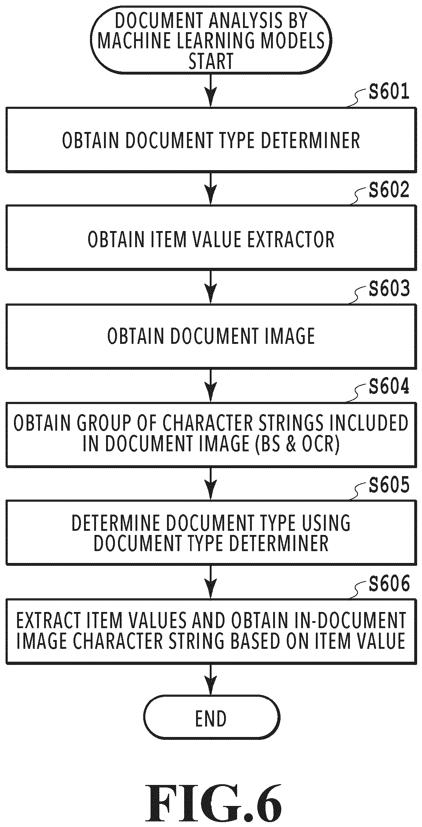

Fig. 6 is a flowchart describing details of the process of S501.

In S601, the CPU 261 obtains the document type determiner 115a, which is a machine learning model, transmitted from the training apparatus 102.

In S602, the CPU 261 obtains the item value extractor 115b, which is a machine learning model, transmitted from the training apparatus 102.

In S603, the CPU 261 obtains the document image transmitted from the image forming apparatus 101. The document image obtained in S603 is a processing target document image.

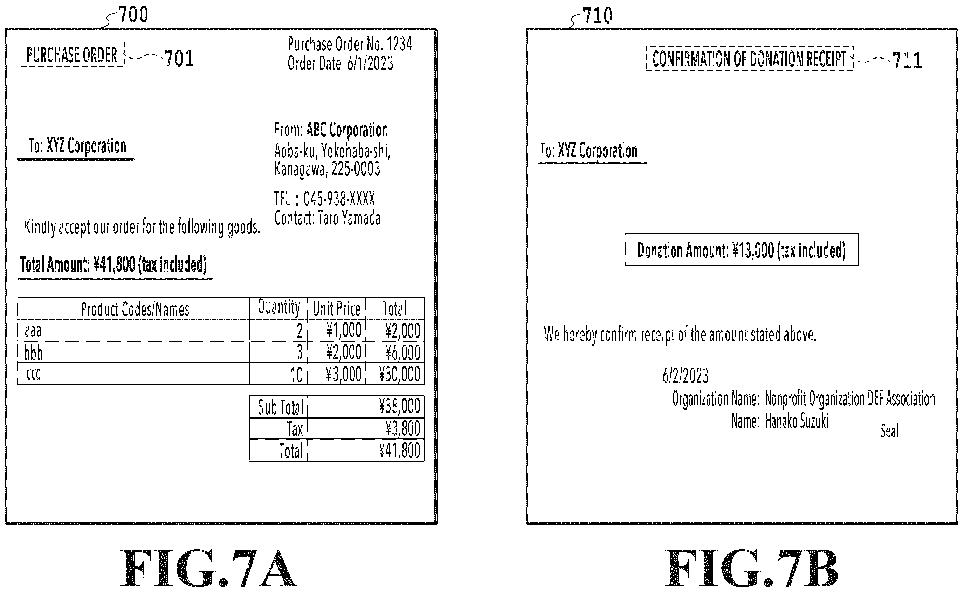

Figs. 7A and 7B are diagrams illustrating examples of the processing target document image obtained in S603. A document image 700 in Fig. 7A is an example of a document image of a document whose title 701 is "purchase order". A document image 710 in Fig. 7B is an example of a document image of a document whose title 711 is "confirmation of donation receipt".

In S604, the CPU 261 executes a block selection (BS) process and an OCR process, which are similar processes to those performed in S402, on the processing target document image to obtain a group of character strings recognized from the processing target document image.

In S605, the CPU 261 inputs the group of character strings recognized from the processing target document image, which were obtained in S604, into the document type determiner 115a obtained in S601. The CPU 261 determines the document type represented by the processing target document image based on the output result from the document type determiner 115a.

As described earlier, the document type options set in S306 represent document types which the document type determiner 115a can output. For example, suppose that data of a group of character strings recognized from the document image 700 with the title "purchase order" in Fig. 7A is input into a document type determiner 115a for which "invoice", "estimate form", "order form", "delivery note", and "contractual document" are available as document type options. While "purchase order" is not included as a document type option, "purchase order" can be considered another way to express the word "order form" included as a document type option. For this reason, the document type determiner 115a has been trained to output "order form", which is a document type included as a document type option, for a document image that is "purchase order". Thus, the document type determiner 115a outputs information indicating "order form" among the document type options as the document type of the document image 700. Hence, in S605, the CPU 261 can determine the document type of the document image 700 as "order form" by using the document type determiner 115a. Since the proper document type represented by the document image 700 is included as a document type option, the document image 700 is a document image whose document type can be appropriately determined with the document type determiner 115a.

On the other hand, the document image 710 in Fig. 7B is an example of a document image of a new document type. An appropriate document type represented by the document image of the new document type, like the document image 710, is not included in the document type options "invoice", "estimate form", "order form", "delivery note", and "contractual document". Even in a case where such a document image 710 is a processing target document image, the document type determiner 115a outputs a document type from among the document type options "invoice", "estimate form", "order form", "delivery note", and "contractual document" as the document type of the document image 710.

Document type determination can be generalized to read "categorization". In categorization with a machine learning model, inputting data not belonging to any pre-expected categories (out of distribution (OOD)) may end up classifying the data into one of the pre-expected categories. The user would have to take time and effort to check whether the document type output by the machine learning model is correct. To address this, in the present embodiment, the large language model 116 is also used to output the document type of the processing target document image, and the user is given a warning in a case where the input document image is the new document type. Details will be described later.

In S606, the CPU 261 inputs the data of the group of character strings obtained in S604 into the item value extractor 115b obtained in S602. Then, based on the output result from the item value extractor 115b, the CPU 261 extracts character strings (item values) corresponding to given items out of the group of character strings recognized from the processing target document image.

Thereafter, the CPU 261 obtains a character string corresponding to a predetermined item among the extracted character strings corresponding to the given items as an "in-document image character string". In the present embodiment, the predetermined item is "title". Thus, as a result of the process of S606, the character string corresponding to the title included in the processing target document image is obtained.

For example, in a case where the document image 700 in Fig. 7A is obtained in S603, the data of the group of character strings in the document image 700 is input into the item value extractor 115b. The item value extractor 115b outputs information indicating that the character string corresponding to the item "title" is "purchase order". In this case, the character string "purchase order" is obtained as an "in-document image character string" in S606. On the other hand, in a case where the document image 710 in Fig. 7B is obtained in S603, the item value extractor 115b outputs information indicating that the character string corresponding to the item "title" is "confirmation of donation receipt". In this case, the character string "confirmation of donation receipt" is obtained as an "in-document image character string" in S606.

This ends the flowchart of Fig. 6, and the process of S501 therefore ends. Then, in the flowchart of Fig. 5, the process proceeds to S502.

In S502 in Fig. 5, a process of generating an instruction message (prompt) and obtaining a reply to the instruction message from the large language model 116 is performed.

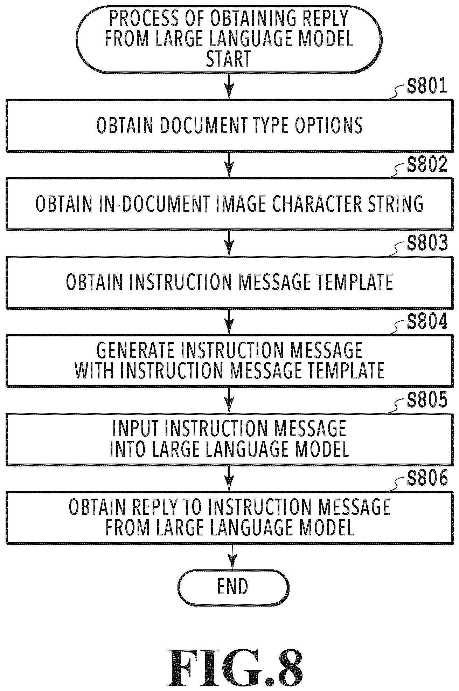

Fig. 8 is a flowchart describing details of the process of S502.

In S801, the CPU 261 obtains the document type options set by the engineer in S306. As described earlier, the document type options are document types to be output by the document type determiner 115a, which is a machine learning model, and have been set by the engineer in advance. For example, in a case where five document types "invoice", "estimate form", "order form", "delivery note", and "contractual document" have been set as document type options, the CPU 261 obtains these five document types. Incidentally, assuming that the document types to be output may vary depending on the supported languages, regions, job types, business contents, and so on, multiple sets of document type options may be prepared and switched.

In S802, the CPU 261 obtains the "in-document image character string" obtained as a result of the process of S606 in Fig. 6. In the present embodiment, the character string corresponding to the title included in the processing target document image is obtained, as mentioned above.

In S803, the CPU 261 obtains an instruction message template from the storage 265. The instruction message template, which has been prepared in advance, may be a template prepared as a preset template by the engineer or the user or such a preset template to which a correction or an addition has been made by the system or the user.

In S804, the CPU 261 generates an instruction message by inserting the document type options obtained in S801 and the "in-document image character string" obtained in S802 into the instruction message template obtained in S803.

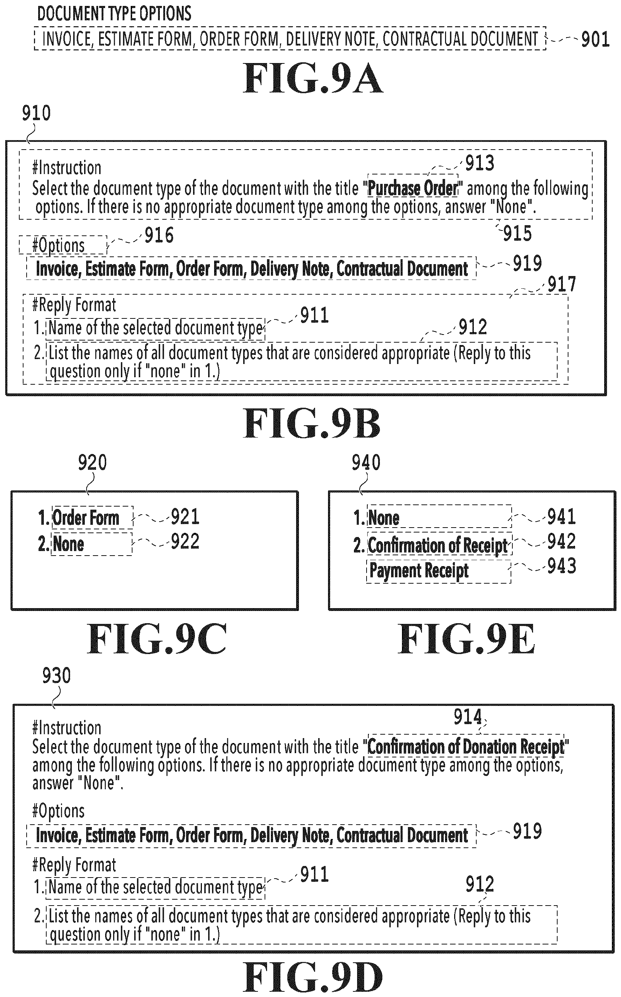

Figs. 9A to 9E are diagrams for describing an instruction message. Fig. 9A illustrates document type options 901 including "invoice", "estimate form", "order form", "delivery note", and "contractual document". Figs. 9B to 9E will be described on the assumption that the document type options 901 in Fig. 9A have been obtained in S801.

Figs. 9B and 9D are diagrams illustrating examples of the instruction message generated in S804. An instruction message 910 in Fig. 9B is an example of the instruction message generated in the case where the document image 700 in Fig. 7A has been obtained as the processing target document image. The instruction message generated in S804 will be described using the instruction message 910. The instruction message 910 include text regions 915, 916, and 917 and a group of document type option character strings 919. In the text region 915, a title character string 913 is included by inserting the "in-document image character string" extracted from the processing target document image.

The instruction message template obtained in S803 is the instruction message 910 from which the title character string 913 and the group of document type option character strings 919 are excluded.

In S804, the CPU 261 inserts the "in-document image character string" obtained in S802 into the instruction message template obtained in S803 as the title character string 913 in the text region 915. For example, the title character string 913 in the instruction message template is blank, and the character string "purchase order", which is the "in-document image character string" obtained from the document image 700, is inserted as the title character string 913 in the instruction message template. Also, the instruction message template does not include the group of document type option character strings 919. For this reason, a group of character strings "invoice", "estimate form", "order form", "delivery note", and "contractual document", which are the document type options 901 obtained in S801, is inserted into the instruction message template as the group of document type option character strings 919. The instruction message 910 is generated in this manner. As described above, the group of document type option character strings 919 included in the instruction message represent the document types included as the document type options obtained in S801.

Incidentally, the content of the instruction message template may be switched according to the document type options obtained in S801. In this case, in S803, an instruction message template in which the document type options obtained in S801 are described in advance as the group of document type option character strings 919 may be obtained. In this case, in S804, the CPU 261 may only insert the "in-document image character string" obtained in S802.

Also, the CPU 261 may switch the content of the instruction message template according to the processing target document image's language or destination. Moreover, the instruction message template may be a template prepared in advance by the engineer or the user or a template prepared in advance and edited later by the user.

The text region 917 included in the instruction message 910 includes questions 911 and 912.

The question 911 is a question for obtaining a reply as to whether the document type of the processing target document image is one of the document types included as the document type options 901. Specifically, the question 911 is a question which, in a case where the document including the title character string 913 is one of the document types included as the document type options 901, is replied to with that document type and is replied to with "none" in a case where there the document is none of the document types.

The question 912 is a question to be replied to with an appropriate document type candidate(s) in the case where the document type of the processing target document image is none of the document types included as the document type options 901. Specifically, the question 912 is a question to be replied to with a document type(s) other than the document types included as the document type options 901 as a document type candidate(s) in the case where the document including the title character string 913 is none of the document types included as the document type options 901.

In S805, the CPU 261 performs a process of inputting the instruction message generated in S804 into the large language model 116. For example, the CPU 261 transmits the instruction message 910 in Fig. 9B to the external information processing server 105 so that the instruction message 910 will be input into the large language model 116.

In S806, the CPU 261 receives a reply to the instruction message input in S805 from the large language model 116. The reply to the instruction message from the large language model 116 includes replies to the questions 911 and 912 included in the instruction message.

For example, in a case where the instruction message 910 in Fig. 9B is input into the large language model 116, an output result 920 in Fig. 9C is obtained from the large language model 116. The output result 920 includes a reply 921 to the question 911 and a reply 922 to the question 912. As described above, in the present embodiment, the large language model 116 is used to output the document type of a processing target document image by using information on a character string included in the processing target document image.

Note that the "in-document image character string" in the present embodiment has been described as a character string corresponding to "title" among item values extracted from a document image. The "in-document image character string" is a character string serving as material for the large language model 116 to determine and return the document type of the processing target document image. The character string corresponding to the title is a character string summarizing the content of the document, and is likely to contain information based on which the document type can be determined. Thus, the present embodiment has been described with the character string corresponding to the title as an example of the "in-document image character string" to be inserted into the instruction message template.

However, the "in-document image character string" is not limited to the character string corresponding to the title. The "in-document image character string" only needs to be a character string containing information necessary for the large language model 116 to determine the document type. For example, there is a case where a document image does not include a character string corresponding to a title. There is also a case where an appropriate document type cannot be determined according to the character string corresponding to the title depending on the region, the supported business type, or the document type. Thus, the information processing server 103 may switch the character string to be obtained as the "in-document image character string" according to the region, the supported business type, or the document type.

Also, the "in-document image character string" may be multiple groups of character strings included in the processing target document image. For example, the "in-document image character string" may be a group of character strings included in the processing target document image, or a combination of a character string corresponding to a predetermined item and a group of character strings included in the processing target document image. For example, a phrase including a character string corresponding to an item that could give a clue to determine the document type and the preceding character string may be obtained as the "in-document image character string". In one example, "invoice date: 10/10/2022", which includes a character string corresponding to an invoice date and a character string preceding the invoice date may be obtained as the "in-document image character string". Also, as for an item that could be included in both a purchase order and an invoice, such as a purchase order number, for example, a character string combining an invoice number and a purchase order number and, in a case where no value is described, expressing that no value is described may be obtained as the "in-document image character string".

This ends the flowchart of Fig. 8, and the process of S502 therefore ends. Then, the process proceeds to S503 in the flowchart of Fig. 5.

In S503, the CPU 261 performs a process of notifying the user of the document type represented by the processing target document image which has been determined based on the output result from the document type determiner 115a in S501.

Figs. 10A to 10D are diagrams each illustrating the document type confirmation screen 1000 as an example of a confirmation screen for presenting the document type determined by the information processing server 103 to the user. In the present embodiment, the following description will be given on the assumption that the document type confirmation screen 1000 is displayed on the display device 210 of the image forming apparatus 101. Thus, the CPU 261 transmits information for displaying the document type confirmation screen 1000 to the image forming apparatus 101. The document type confirmation screen 1000 may be displayed on the display device 267 of the information processing server 103.

As a result of S503, the document type determined based on the output result from the document type determiner 115a in S501 is displayed in a document type display region 1001 in the document type confirmation screen 1000. A preview of the processing target document image is displayed in a preview display region 1010.

The document type confirmation screen 1000 in Fig. 10A represents an example of a confirmation screen displayed in the case where the document image 700 in Fig. 7A is the processing target. In the case where the document image 700 is the processing target, the document type determined based on the output result from the document type determiner 115a in S501 is "order form". Thus, the CPU 261 performs display control such that "order form" will be displayed in the document type display region 1001 in the document type confirmation screen 1000 by default.

The document type confirmation screens 1000 in Figs. 10B to 10D represent examples of a confirmation screen displayed in the case where the document image 710 in Fig. 7B is the processing target. Even in a case where a document image of "confirmation of receipt", which is a new document type, such as the document image 710, is the processing target, the document type determiner 115a still outputs a document type from among the document type options 901. In response to receiving a group of character strings in the document image 710, the document type determiner 115a attempts to determine the document type of the document image 710 from among the document type options 901, and determines the document type as "delivery note", for example, since "receipt" and "delivery note" are both related to receipt of goods or money. Consequently, a wrong document type, such as "delivery note", is determined as the document type of the document image 710 in S501. In this case too, in S503, the CPU 261 displays "delivery note", which is a wrong document type, as the document type of the document image 710 in the document type display region 1001 in the document type confirmation screen 1000 by default.

In S504, the CPU 261 determines whether the reply to the instruction message obtained from the large language model 116 is a reply indicating that the document type of the processing target document image is none of the document types included as the document type options 901.

The question 911 included in the instruction messages 910 and 930 is a question for the large language model 116 to reply to with "none" in a case where the document type of the processing target document image is none of the document types included as the document type options 901. Thus, in S504, whether the reply to the question 911 from the large language model 116 is "none" is determined, for example.

An output result 940 in Fig. 9E is an output result from the large language model 116 for the instruction message 930 in Fig. 9D. The instruction message 930 in Fig. 9D represents an example of the instruction message generated in the case where the document image 710 in Fig. 7B is the processing target, and the title "confirmation of donation receipt" of the document image 710 is inserted as a title character string 914.

As mentioned earlier, the document image 710 represents an example of a document image of a new document type not included as an document type option 901 as an appropriate document type. Of the replies included in the output result 940 in Fig. 9E, a reply 941 to the question 911 in the instruction message 930 is "none". This means that the large language model 116 has replied that the document type of the processing target document image 710 is not included in the document type options 901. If "none" is obtained as a reply to the question 911 from the large language model 116 (YES in S504) as above, the CPU 261 moves to S505.

In S505, the CPU 261 notifies the user that the document type of the processing target document image may be none of the document types included as the document type options 901. In other words, the CPU 261 notifies the user that the document type displayed in the document type display region 1001 as a result of S503 may be wrong. For example, the CPU 261 outputs information for displaying a warning to the image forming apparatus 101 so that the warning can be displayed on the display device 210 of the image forming apparatus 101.

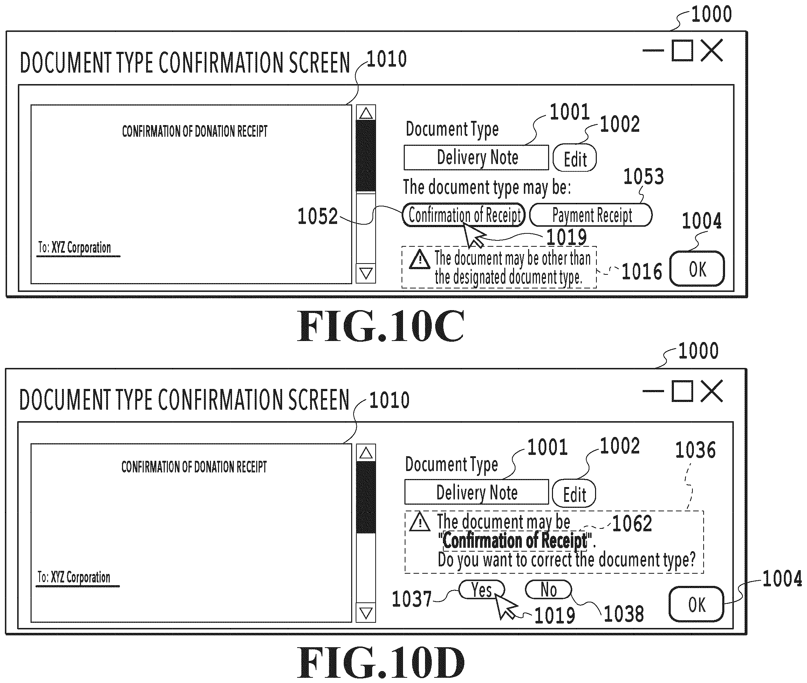

In S505, the CPU 261, for example, outputs information for displaying an alert 1016 or 1036 to the image forming apparatus 101 so that the alert 1016 or 1036 will be displayed in the document type confirmation screen 1000, as illustrated in Figs. 10B and 10D. Displaying an alert as above makes it possible to notify the user that the document type displayed in the document type display region 1001 may be a type not included in the document type options 901 illustrated in Fig. 9A. Note that the CPU 261 may skip S505 and move to S506.

As mentioned earlier, in a case where a document image of a new document type not included as any of the document type options 901 is the processing target, the document type determiner 115a outputs a wrong document type. The large language model 116, on the other hand, is not a model that generates a reply from among a preset list of document types. Thus, even in the case where a document image of a new document type is the processing target, it is possible to obtain a reply indicating that the new document type is none of the document types included as the document type options 901 from the large language model 116. Accordingly, it is possible to notify the user that the document type determined based on the output result from the document type determiner 115a, which is the document type presented to the user in S503, may be wrong.

In S506, the CPU 261 notifies the user of the candidate(s) for the document type represented by the processing target document image returned from the large language model 116. For example, the CPU 261 outputs information for displaying the document type candidate(s) to the display device 267.

Replies 942 and 943 included in the output result 940 from the large language model 116 in Fig. 9E are replies to the question 912 in the instruction message 930. The question 912 is a question to be replied to with a document type(s) other than the document types included as the document type options 901 as a candidate(s) for the document type of the processing target document image in the case where the reply to the question 911 is "none". In the case of the output result 940 in Fig. 9E, the large language model 116 has returned two document types "confirmation of receipt" and "payment receipt" as candidates for the document type of the document image 710, whose title is "confirmation of donation receipt". In this case, in order to display "confirmation of receipt" and "payment receipt" as candidates for the document type of the document image 710 in the document type confirmation screen 1000, the CPU 261 outputs information for displaying the two document types to the image forming apparatus 101.

For example, the CPU 261 displays a drop-down list under the document type display region 1001 displaying the document type determined based on the output result from the document type determiner 115a, as illustrated in the document type confirmation screen 1000 in Fig. 10B. The document type candidates returned from the large language model 116, or "confirmation of receipt" and "payment receipt", are displayed in cells 1042 and 1043 included in the drop-down list.

Alternatively, as illustrated in Fig. 10C, buttons 1052 and 1053 corresponding to the document type candidates returned from the large language model 116 may be displayed next to each other under the document type display region 1001. Still alternatively, in a case where the large language model 116 return only one document type candidate, for example, the document type candidate may be displayed by incorporating text 1062 indicating the document type candidate in the alert 1036 as illustrated in Fig. 10D.

On the other hand, if the large language model 116 returns a document type included as a document type option 901, like the reply 921 to the question 911 in Fig. 9C, as a reply to the question 911 (NO in S504), the flowchart of Fig. 5 ends.

The document type confirmation screen 1000 in Fig. 10A represents an example of a confirmation screen in a case where the reply 921 to the question 911 in Fig. 9C is "order form" and is not "none". In a case where the document type of the processing target document image is appropriately determined in S501, a confirmation screen is displayed in which no alert or document type candidate is displayed, as illustrated in Fig. 10A.

Now, suppose that the document type determined based on the output result from the document type determiner 115a in S501 is "purchase order". Suppose also that the document type with which the large language model has replied to the question 911 in S502 is "contractual document". Like the above, there are cases where the large language model 116 returns a document type included as a document type option 901 but the document type returned by the large language model 116 is different from the document type determined based on the output result from the document type determiner 115a. In such a case, the CPU 261 may determine NO in S504 and perform S505 and S506. In this case, the document type with which the large language model 116 has replied to the question 911 may be displayed as a document type candidate in the document type confirmation screen 1000.

### [Correction of Document Type]

In a case where the user changes the character string presented in S503 as the document type represented by the processing target document image, the user may manually input the corrected document type. Alternatively, the user may select the corrected document type from among the document type candidates returned by the large language model 116 that are displayed in the document type confirmation screen 1000 in Fig. 10B or 10C. Methods for the user to correct the document type will be described using Figs. 10A to 10D. The description will be given on the assumption that the document type confirmation screen 1000 is displayed on the display device 210 of the image forming apparatus 101 and obtains the user's operations via control by the CPU 261 of the information processing server 103.

A method for the user to correct the document type by manual input will be described using Fig. 10A. In the document type display region 1001, "order form", which is a document type determined using an output result from the document type determiner 115a, is displayed. In response to detecting that the user has pressed an edit button 1002, the document type display region 1001 is switched to an editable form, such as a text box, and an input cursor 1003 is displayed. Using the input cursor 1003, the user can correct the text displayed in the document type display region 1001, which indicates the document type, by manual input.

Next, methods of selecting a corrected document type from among document type candidates suggested by the large language model 116 will be described using Figs. 10B to 10D.

In response to detecting that the user has pressed a list button 1015 in the document type confirmation screen 1000 in Fig. 10B, a drop-down list including document type candidates suggested by the large language model 116 is displayed. Suppose that the user selects the cell 1042, in which "confirmation of receipt" is displayed as a document type candidate, with a cursor 1019, for example. In this case, the selection of "confirmation of receipt" is detected, and "delivery note" displayed in the document type display region 1001 is switched to "confirmation of receipt", and "delivery note" displayed in the document type display region 1001 is overwritten to be displayed as a document type candidate.

The document type confirmation screen 1000 in Fig. 10C is a screen obtained by changing the drop-down list for displaying document type candidates in Fig. 10B to the buttons 1052 and 1053. With Fig. 10C, the user can browse the document type candidates suggested by the large language model 116 without having to press the list button 1015. As for the operation performed with Fig. 10C, the cells in the drop-down list in the operation with Fig. 10B are replaced with the buttons.

The document type confirmation screen 1000 in Fig. 10D is a confirmation screen in a case where the large language model 116 has returned only one document type candidate. In response to detecting that the user has pressed a Yes button 1037, the display of the document type display region 1001 is switched to "confirmation of receipt", which is a document type candidate. Moreover, "delivery note", which has been displayed in the document type display region 1001, is saved in a storage unit of the information processing server 103. In response to detecting that the user has pressed a No button 1038, "delivery note", which was previously displayed, is obtained from the storage unit of the information processing server 103, and "delivery note" is displayed in the document type display region 1001. Note that no operation may be performed in a case where the No button 1038 is pressed before the Yes button 1037 is pressed.

Thereafter, by pressing an OK button 1004 in Figs. 10A to 10D, the user can fix the document type displayed in the document type display region 1001 to the document type of the processing target document image. The fixed document type will be managed by the data management unit 157 of the information processing server 103, for example.

As described above, in the present embodiment, in a case where a document image of a new document type other than the document types which the document type determiner 115a can output is input as a processing target, the large language model is caused to return an appropriate document type(s). For this reason, even in the case where a document image of a new document type is a processing target, candidates for the new document type can be presented to the user before the document type determiner 115a undergoes additional training. Consider, for example, a case where the outputtable document types are "invoice", "estimate form", "order form", "delivery note", and "contractual document", and the user inputs a document image of "confirmation of receipt", which is none of those document types. In this case, the document type determiner 115a erroneously outputs "delivery note" as the document type of the document image. Nonetheless, it is possible to notify the user that the document type of the document image may be "confirmation of receipt" based on a reply from the large language model. In a case where the document type determiner 115a makes a rule-based determination to output a document type, too, the document type determiner 115a may likewise set a wrong document type if a document image of a new document type is the processing target. In accordance with the present embodiment, even in this case, it is possible to suggest document type candidates to the user based on a reply from the large language model.

Also, in the present embodiment, an instruction message (prompt) is generated using a character string included in a processing target document image. This prevents the large language model from returning a document type that is not likely to be the document type represented by the processing target document image. Thus, even in a case where the document type is erroneously determined to be "delivery note" based on the output result from the document type determiner 115a and "delivery note" thus erroneously determined is presented to the user, "confirmation of receipt", which is likely to be an appropriate document type, can be presented as a document type candidate to the user. Hence, in accordance with the present embodiment, even in a case where a document image of a new document type is input as a processing target, the user will not need to manually input the correct document type or find the correct document type from among many options. That is, in accordance with the present embodiment, it is possible to reduce the time and effort required for the user to correct the document type.

Incidentally, the document type returned from the large language model 116 may be displayed in the document type display region 1001 by default, instead of being displayed as a candidate. In that case, the document type determined based on the output result from the document type determiner 115a may be displayed as a candidate, or only the reply from the large language model 116 may be displayed. For example, the configuration may be such that which one of the output results from the large language model 116 and the document type determiner 115a to preferentially display is settable. Then, in a case where priority is given to the large language model 116, the document type returned by the large language model 116 may be displayed in the document type display region 1001 by default.

Also, the "in-document image character string" to be described in the instruction message template may be the entire group of character strings obtained by performing the OCR process on the processing target document image. In this case, the item value extraction using the item value extractor 115b is not necessary. In this case, the step of generating the item value extractor 115b and the item value extraction process using the item value extractor 115b may be omitted.

### <Embodiment 2>

In Embodiment 1, a method of causing the large language model 116 to return a document type has been described. In Embodiment 2, a method of causing the large language model 116 to also return the reason why the large language model 116 has returned the document type will be described. In the present embodiment, its difference from Embodiment 1 will be mainly described. Features that are not particularly specified are the same components and processes as those in Embodiment 1.

### [Sequence of Process of Determining Document Type]

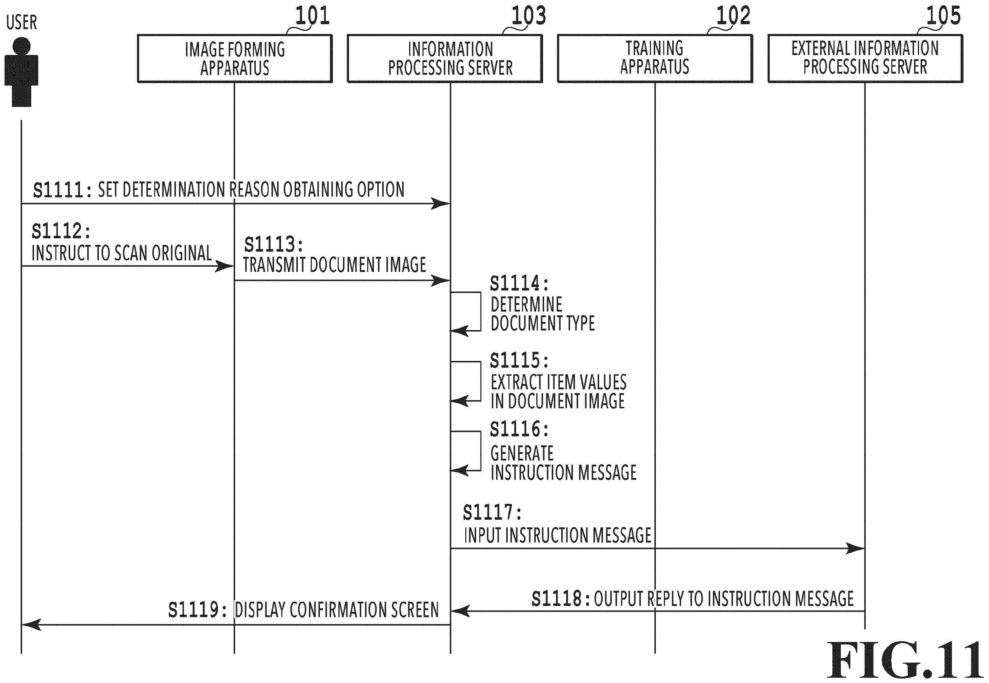

Fig. 11 is a sequence chart according to the present embodiment corresponding to the sequence in Fig. 3B. The sequence for the development of the machine learning model is similar to Fig. 3A and is therefore omitted.

In S1111, the user sets an option for obtaining the reason for the determined document type, and the information processing server 103 obtains the content set by the user in S1111. By enabling the reason obtaining option, the reason for the document type to be determined by the large language model 116 will be obtained from the large language model 116 as well.

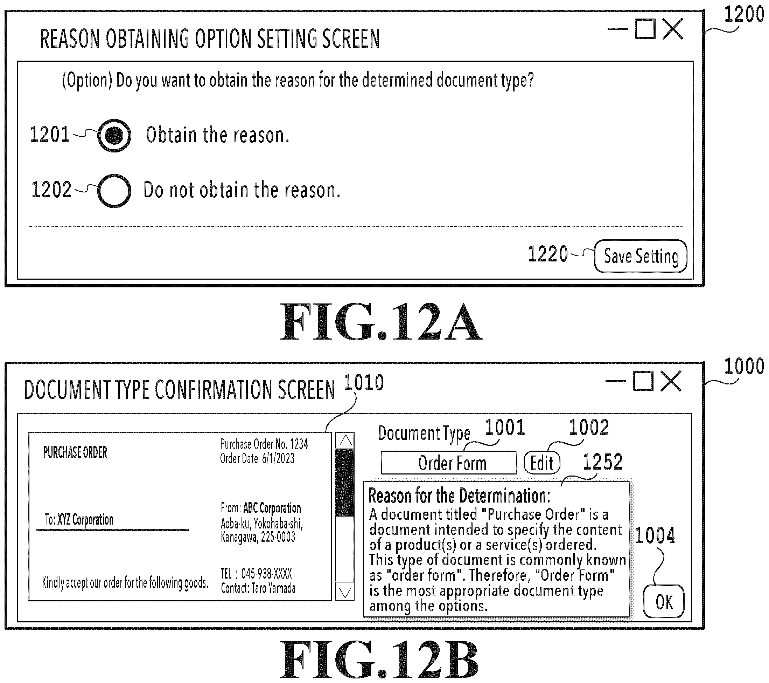

Fig. 12A is a diagram illustrating an option setting screen 1200 as an example of a screen on which the user sets whether to enable or disable the reason obtaining option in S1111. The following description will be given on the assumption that the option setting screen 1200 is displayed on the display device 210 of the image forming apparatus 101 via control by the CPU 261 of the information processing server 103.

A radio button 1201 included in the option setting screen 1200 is a radio button for enabling the reason obtaining option. A radio button 1202 is a radio button for disabling the reason obtaining option. Pressing a save button 1220 will transmit the content of the setting corresponding to the selected one of the radio buttons 1201 and 1202 to the information processing server 103.

Note that S1112 to S1119 are similar processes to S311 to S318, and description thereof is omitted.

Here, the process of S1116 in a case where the reason obtaining option is enabled is different from S315. In the case where the reason obtaining option is set to be enabled, an instruction message is generated in S1116 such that the large language model 116 will also return the reason for the returned document type. In the case where the reason obtaining option is set to be disabled, an instruction message is generated such that the reason for the returned document type will not be obtained from the large language model 116, as in Embodiment 1.

### [Process of Displaying Document Type]

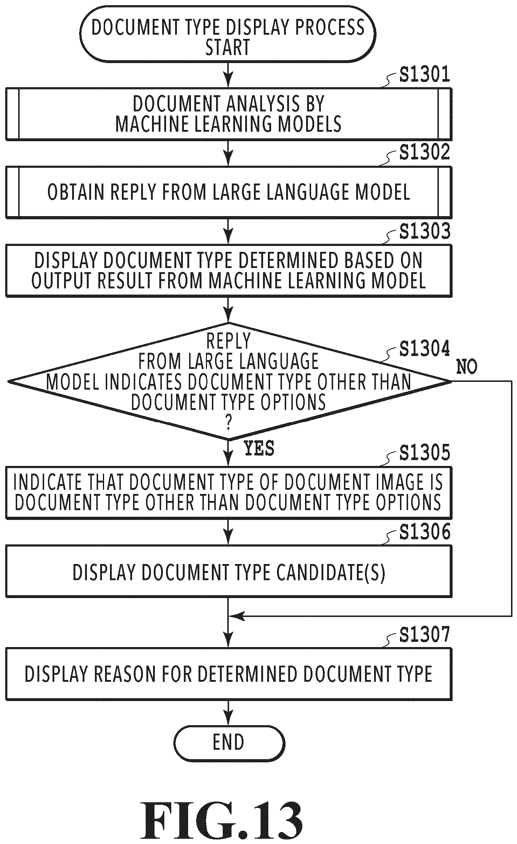

Fig. 13 is a flowchart describing a process of determining and displaying the document type of a document image, and is a flowchart according to the present embodiment corresponding to the flowchart of Fig. 5 in Embodiment 1.

In S1301, which is a similar process to S501, the document type of the processing target document image is determined based on the output result from the document type determiner 115a, which is a machine learning model. Detailed description is omitted.

In S1302, the CPU 261 generates an instruction message, and obtains a reply to the instruction message from the large language model 116.

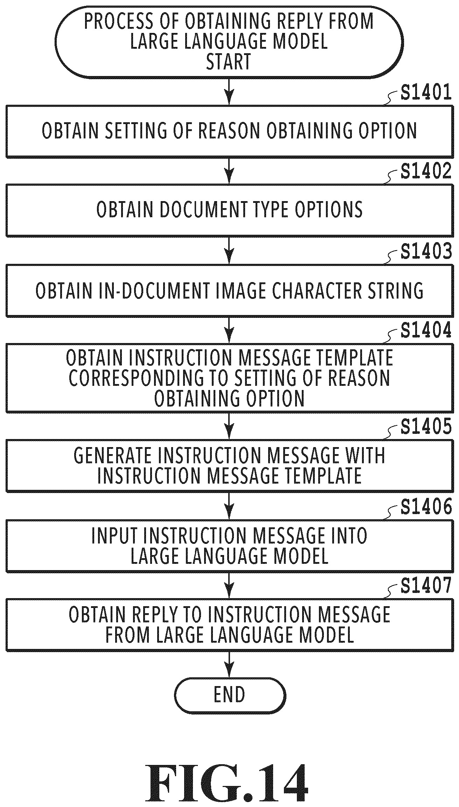

Fig. 14 is a flowchart describing details of the process of S 1302, and is a flowchart according to the present embodiment corresponding to the flowchart of Fig. 8 in Embodiment 1.

In S1401, the CPU 261 obtains the setting of the reason obtaining option set by the user in S1111. Information indicating whether the reason obtaining option is enabled or disabled is obtained as the setting.

Note that S1402 and S1403 are the same processes as S801 and S802 in Fig. 8, and description thereof is therefore omitted.

In S1404, the CPU 261 obtains an instruction message format corresponding to the setting of the reason obtaining option obtained in S1401.

In S1405, the CPU 261 generates an instruction message by inserting the document type options obtained in S1402 and the in-document image character string obtained in S1403 into the instruction message template obtained in S1404.

The instruction message template obtained in a case where the reason obtaining option is disabled, that is, in a case where the radio button 1202 in the option setting screen 1200 is selected, is the same as the instruction message template corresponding to the instruction message 910 in Fig. 9B. The instruction message template obtained in a case where the reason obtaining option is enabled, that is, in a case where the radio button 1201 in the option setting screen 1200 is selected, is an instruction message template including a question to be replied to with the reason for the determined document type.

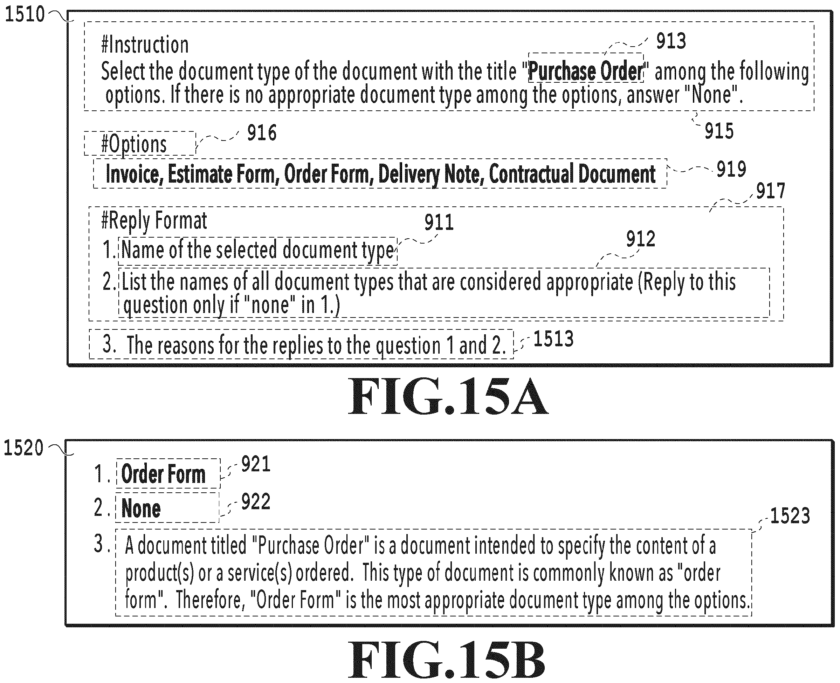

Figs. 15A and 15B are diagrams for describing an instruction message and a reply thereto. An instruction message 1510 in Fig. 15A represents an example of the instruction message generated based on the instruction message template obtained in the case where the reason obtaining option is enabled. The instruction message template obtained in the case where the reason obtaining option is enabled is the instruction message template described in Embodiment 1 with a question 1513 added thereto. The question 1513 is a question to be replied to with the reasons for the replies to the question 911, which is an instruction to return a document type from among the document type options 901, and to the question 912, which is an instruction to return a document type other than the document type options. Specifically, the question 1513 is a question for the large language model 116 to reply to with the reason why the document type returned by the large language model 116 is the document type of the processing target document image.

An output result 1520 in Fig. 15B represents an example of an output result obtained by inputting the instruction message 1510 in Fig. 15A into the large language model 116. The reply included in the output result 1520 includes a reply 1523 to the question 1513 additionally included in the instruction message 1510, which is the difference from the output result 920 in Embodiment 1 illustrated in Fig. 9C. The instruction message 1510 in Fig. 15A is an instruction message generated in the case where the document image 700 in Fig. 7A is the processing target. The large language model 116 has returned "order form" as the document type of the document image 700 as a reply to the question 911 in the instruction message 1510. Thus, as illustrated in Fig. 15B, the large language model 116 has returned the reason for selecting "order form" in the reply 1523 to the question 1513.

The content of the instruction message template in the case where the reason obtaining option is enabled may also be switched according to the document type options. In that case, a group of document type option character strings may be included in the instruction message template in advance. Also, the CPU 261 generate an instruction message with its content switched according to the input document image's language or destination. Moreover, the instruction message template may be a template prepared in advance by the engineer or the user or a template prepared in advance and edited later by the user.

Note that S1406 and S1407 are similar to S805 and S806 in Fig. 8 and description thereof is therefore omitted. In S1406, an output result 1520 as illustrated in Fig. 15B is obtained from the large language model 116 as the output result for the instruction message 1510 in Fig. 15A, for example. Referring back to Fig. 13, the description of the flowchart of Fig. 13 will now be resumed.

Note that S1303 to S1306 in Fig. 13 are similar processes to S503 to S506 in Fig. 5, and description thereof is therefore omitted.

In S1307, which is a process in the case where the reason obtaining option is enabled, the CPU 261 outputs the reason for the document type returned by the large language model 116, which was obtained in S1302, to the display device 267.

The document type confirmation screen 1000 in Fig. 12B represents an example of the document type confirmation screen in the case where the reason obtaining option is enabled. In the present embodiment too, the following description will be given on the assumption that the document type confirmation screen 1000 is displayed via control by the CPU 261 of the information processing server 103. As illustrated in Fig. 12B, in order that the user can acknowledge the reason for the document type returned by the large language model 116, the document type confirmation screen 1000 in the present embodiment includes a region 1252 to display the reply to the question 1513. Note that, in the case where the user selects the radio button 1202, the reason will not be obtained, and therefore the region 1252 will not be displayed.

As described above, in accordance with the present embodiment, it is possible to present the reason why a document type was determined as the document type of a processing target document image. This reduces the time and effort required for the user to confirm the document type. For example, in a case where the user scans a document which is "purchase order", and the document type is determined to be "order form" from that scanned image, the user can determine whether "order form" is the correct document type based on the presented reason.

### <Embodiment 3>

In the above-described embodiments, methods utilizing a single large language model have been described. In Embodiment 3, a method utilizing one or more large language models set by the engineer or the user will be described. In the present embodiment, its difference from Embodiment 1 will be mainly described. Features that are not particularly specified are the same components and processes as those in Embodiment 1.

### [Sequence of Process of Determining Document Type]

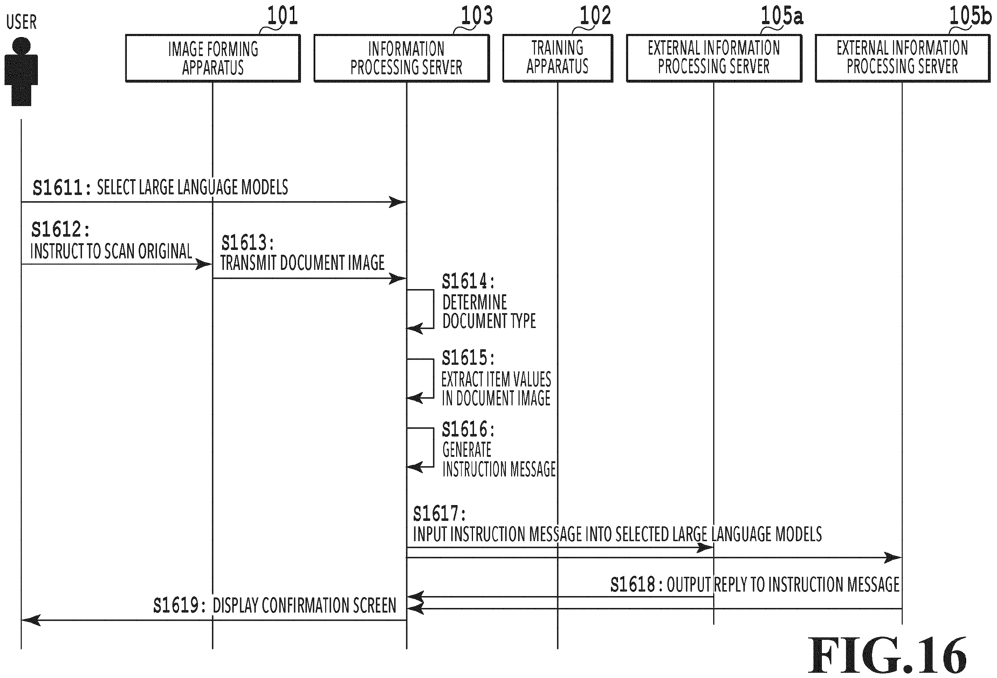

Fig. 16 is a sequence chart according to the present embodiment corresponding to the sequence in Fig. 3B. The sequence for the development of the machine learning model is similar to Fig. 3A and is therefore omitted.

In S1611, the user selects large language models as instruction message input destinations on a setting screen. The information processing server 103 obtains setting information indicating the content selected by the user in S1611.

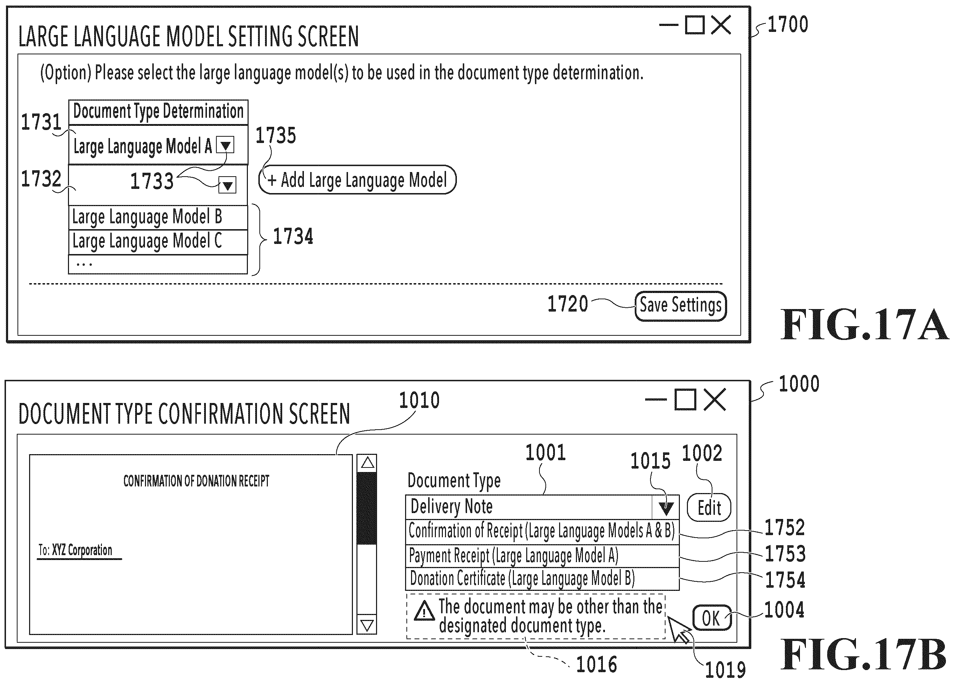

Fig. 17A is a diagram illustrating a large language model setting screen 1700 as an example of a screen for the user to select large language models in S1611. The following description will be given on the assumption that the large language model setting screen 1700 is displayed on the display device 210 of the image forming apparatus 101 via control by the CPU 261 of the information processing server 103. The CPU 261 functions also as a setting unit that sets the large language models into which to input an instruction message. In the present embodiment, an instruction message is input into each large language model selected by the user, and a reply to the instruction message is received from each large language model into which the instruction message is input.

In a model display region 1731 in the large language model setting screen 1700 in Fig. 17A, a large language model selected as an instruction message input destination is displayed. Fig. 17A illustrates a state where "large language model A" displayed in the model display region 1731 is selected as an instruction message input destination. In a case of changing the large language model set as the instruction message input destination, the user presses a list button 1733 included in the model display region 1731. In response to pressing the list button 1733, a drop-down list including large language models which the user can select is displayed. In a case where the user selects a large language model from the drop-down list, the name of the selected large language model is displayed in the model display region 1731.

In a case of inputting an instruction message into multiple large language models to obtain replies from the multiple large language models, the user presses an add button 1735. As a result, a new model display region 1732 is added, as illustrated in Fig. 17A. In a case where the user selects "large language model B", for example, from a drop-down list 1734 displayed by pressing a list button 1733 included in the model display region 1732, "large language model B" thus selected is displayed in the model display region 1732. Pressing the add button 1735 can similarly add a third large language model input field.

In a case where the user presses a save button 1720 in this state, "large language model A" and "large language model B" displayed in the model display regions 1731 and 1732 are set to be large language models as instruction message input destinations. Information indicating the selected large language models is transmitted to the information processing server 103.

Note that S1612 to S1619 are similar processes to S311 to S318, and description thereof is omitted. Here, the processes of S1617 and S1618 are different from S316 and S317. In S1617, the instruction message is input into the large language models selected in S1611. In S1618, replies to the instruction message are received from the selected large language models.

Fig. 16 illustrates a flow in a case where the user sets multiple large language models as instruction message input destinations in S1611. An external information processing server 105a represents a server that utilizes "large language model A", and an external information processing server 105b represents a server that utilizes "large language model B". In a case where the user sets "large language model A" and "large language model B" as instruction message input destinations in S1611, the instruction message is transmitted in S1617 to each of the large language models to input the instruction message into each of them. Then, a reply is received from each of the large language models in S1618.

### [Process of Displaying Document Type]

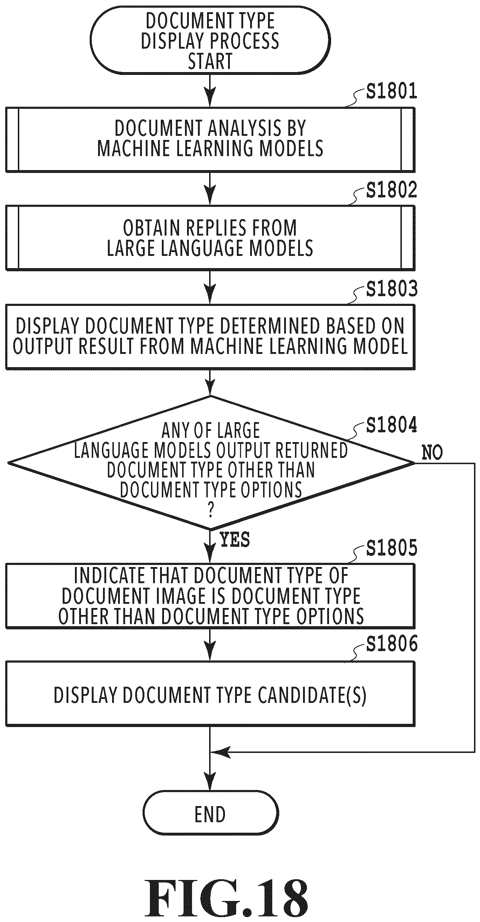

Fig. 18 is a flowchart for describing a process of determining and displaying the document type of a document image, and is a flowchart according to the present embodiment corresponding to the flowchart of Fig. 5 in Embodiment 1.

In S1801, which is a similar process to S501 in Fig. 5, the document type of the processing target document image is determined based on the output result from the document type determiner 115a, which is a machine learning model.

In S1802, which is a step corresponding to S502 in Fig. 5, an instruction message is input into the large language models selected by the user, and a reply to the instruction message is received from each large language model as an output result.

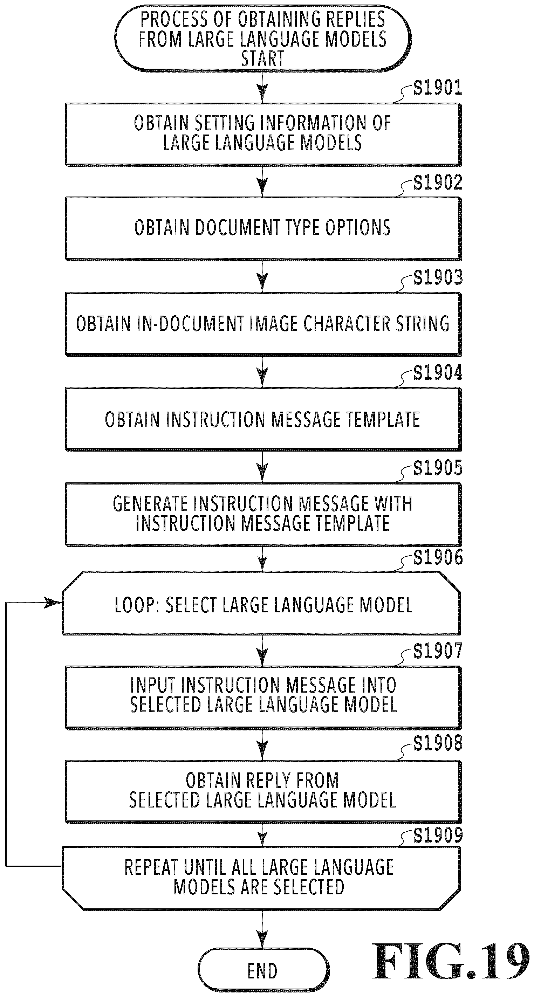

Fig. 19 is a flowchart describing details of the process of S1802, and is a flowchart according to the present embodiment corresponding to the flowchart of Fig. 8 in Embodiment 1.

In S1901, the CPU 261 obtains the setting information indicating the large language models selected by the user in S1611. For example, in the case where the user has selected "large language model A" and "large language model B" as input destinations in S1611, the CPU 261 obtains information indicating "large language model A" and "large language model B".

Note that S1902 to S1905 are similar processes to S801 to S804 in Fig. 8 and description thereof is therefore omitted. That is, the processes up to the generation of an instruction message are performed.

Subsequent S1906 to S1909 are a loop process. In S1906, the CPU 261 selects a processing target large language model from among the large language models represented by the setting information obtained in S1901. In S1909, the CPU 261 determines whether the process has been performed for all of the large language models. If the process has not been performed for all of the large language models, the CPU 261 returns to S1906, and selects the next processing target from among the large language models for which the process has not yet been performed.

In S1907, the CPU 261 inputs the instruction message generated in S1905 into the processing target large language model.

In S1908, the CPU 261 receives a reply to the instruction message from the processing target large language model.

If the process has been completed for all of the large language models selected by the user in S1909, the flowchart of Fig. 19 ends, and the CPU 261 proceeds to S1803 in Fig. 18. For example, in the case where the user has selected "large language model A" and "large language model B" in S1611, the CPU 261 executes the processes of S1907 and S1908 on each of "large language model A" and "large language model B". That is, the CPU 261 performs the processes of S1907 and S1908 twice.

In S1803, which is a similar process to S503 in Fig. 5, the document type determined based on the output result from the document type determiner 115a is displayed in the document type confirmation screen 1000.

In S1804, the CPU 261 determines whether a reply indicating that the document type of the processing target document image is none of the document types included as the document type options 901 has been obtained from one or more large language models. The flowchart of Fig. 18 ends if a reply indicating that the document type of the processing target document image is a document type included as a document type option 901 is obtained from all of the large language models selected by the user (NO in S1804).

The CPU 261 moves to S1805 if a reply indicating that the document type of the processing target document image is none of the document types included as the document type options 901 is obtained from at least one of the large language models (YES in S1804). Suppose, for example, that the reply to the question 911 transmitted from "large language model A" is a reply indicating that the document type of the processing target document image is a document type included as a document type option. Suppose also that the reply to the question 911 transmitted from "large language model B" is a reply indicating that the document type of the processing target document image is none of the document types included as the document type options. In this case, the CPU 261 determines YES in S1804 and moves to S1805.

Note that S1805 and S1806 in Fig. 13 are similar processes to S505 and S506 in Fig. 5. In order that the alert 1016 and document type candidates returned from one or more of the large language models selected by the user will be displayed in the document type confirmation screen 1000, the CPU 261 outputs information necessary to display the alert 1016 and the document type candidates to the display device 267.

The document type confirmation screen 1000 in Fig. 17B represents an example of the document type confirmation screen displayed by the CPU 261 in a case where document type candidates are obtained from multiple large language models as output results. Suppose, for example, that the instruction message 930 illustrated in Fig. 9D has been input into at least the large language models A and B, and "none" has been obtained as the replies to the question 911 from the large language models A and B. Suppose also that candidates for the document type of the processing target document image have been returned from the large language models A and B as their replies to the question 912. For example, suppose that "confirmation of receipt" and "payment receipt" have been obtained from the large language model A as its reply to the question 912. Suppose also that "confirmation of receipt" and "donation certificate" have been obtained from the large language model B as its reply to the question 912. In sum, "confirmation of receipt", "payment receipt", and "donation certificate" have been obtained as document type candidates from the multiple large language models selected by the user.

In this case, a drop-down list displaying the document type candidates is displayed under the document type display region 1001. In the drop-down list, pieces of text 1752, 1753, and 1754 are displayed which indicate "confirmation of receipt", "payment receipt", and "donation certificate" as the document type candidates, respectively. Also, the pieces of text 1752, 1753, and 1754 may each contain information indicating the large language model which returned the corresponding document type as a candidate. For example, "confirmation of receipt" has been returned from the large language models A and B. Thus, the text 1752 for displaying "confirmation of receipt" is described in a manner in which "large language models A & B", indicating the large language models A and B, which have returned "confirmation of receipt", is attached to "confirmation of receipt".

Also, a document type returned from a larger number of large language models may be displayed in a more prioritized manner. For example, "confirmation of receipt", which has been returned from the two large language models A and B, is displayed in a prioritized manner by being displayed at the top of the drop-down list.

As described above, in accordance with the present embodiment, in a case where the user inputs a document of a type other than preset document types, it is possible to cause multiple large language models to return document types. This increases the possibility that an appropriate document type be returned. Also, in accordance with the present embodiment, it is possible to obtain document type candidates from multiple large language models and therefore increase information as clues that help the user determine whether or not to correct the document type. This reduces the load of correcting the document type on the user.

### <Embodiment 4>

In Embodiment 1, a method in which output results from the document type determiner 115a and the large language model 116, which are machine learning models, are displayed has been described. In Embodiment 4, a method in which only a document type returned from the large language model 116 is displayed will be described. In the present embodiment, its difference from Embodiment 1 will be mainly described. Features that are not particularly specified are the same components and processes as those in Embodiment 1.

### <Configuration of Information Processing System>

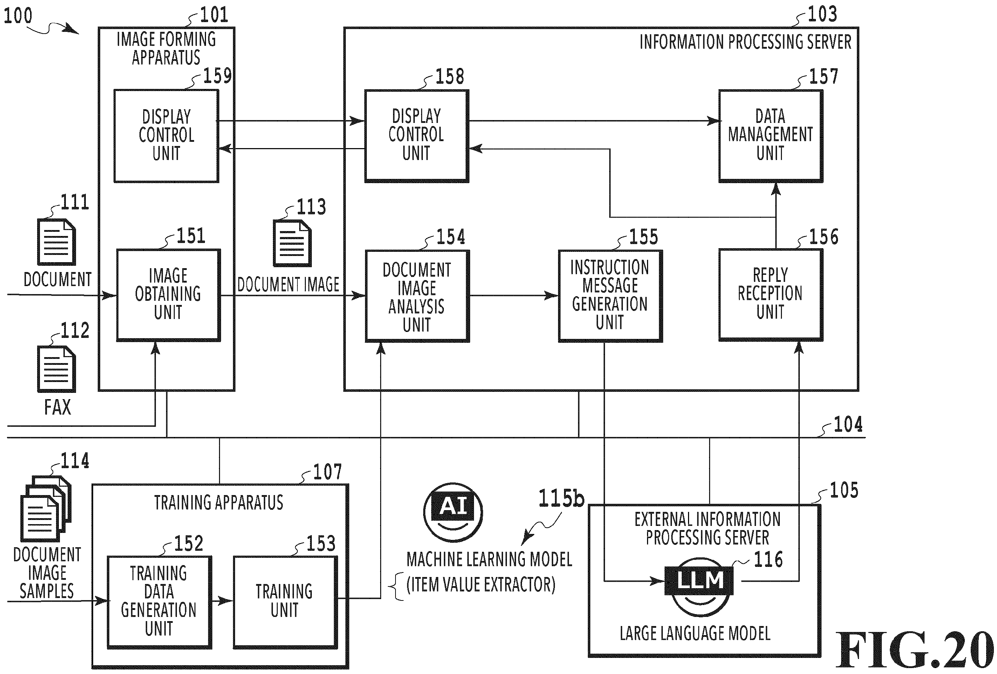

Fig. 20 is a diagram illustrating an example of a configuration of an information processing system in the present embodiment corresponding to Fig. 1. As illustrated in Fig. 20, in the present embodiment, the training apparatus 102 does not generate the document type determiner 115a. The training data generation unit 152 obtains second correct labels and generates second training data. The training unit 153 generates the item value extractor 115b, which is a machine learning model, by using the second training data.

### [Sequences]

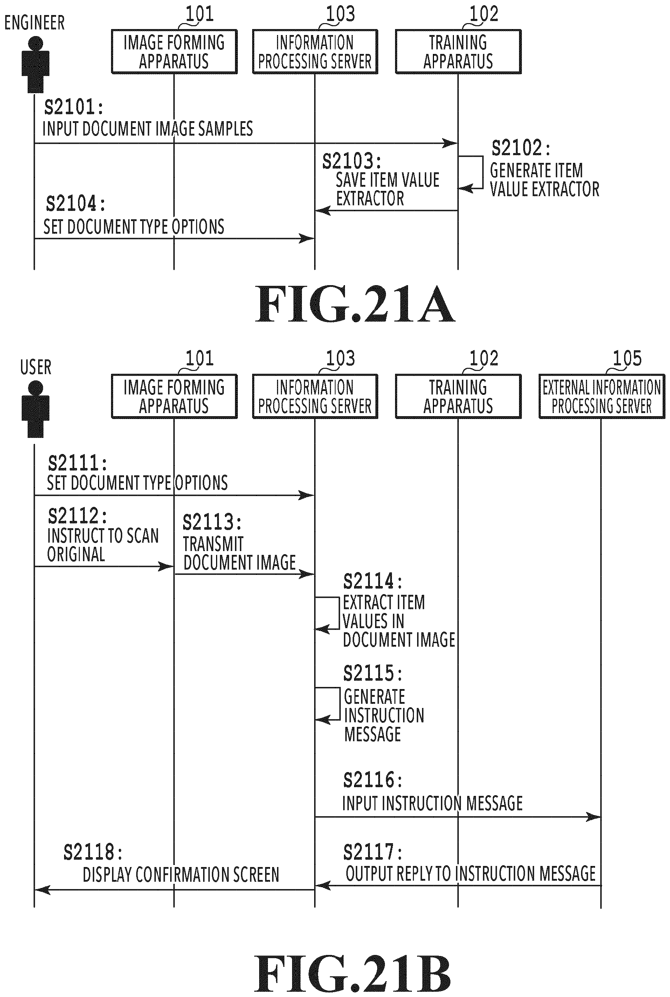

Fig. 21A is a sequence chart according to the present embodiment corresponding to the sequence for the development of machine learning models in Fig. 3A. Note that S2101 is a similar process to S301 and S2102 to S2104 are similar processes to S304 to S306, and description thereof is therefore omitted. Since the document type determiner 115a is not generated in the present embodiment, the sequence in Fig. 21A does not include steps corresponding to S302 and S303, which are steps related to the generation of the document type determiner 115a. Also, the flowchart of Fig. 4 without S403, S405, and S407 is executed as the specific processes of S2102 and S2103.

Fig. 21B is a sequence chart according to the present embodiment corresponding to the sequence in Fig. 3B. In S2111, the user sets document type options. The information processing server 103 obtains information indicating the document type options set by the user in S2111. In the present embodiment, not only the engineer but also the user can set document type options. Since the document type determiner 115a is not generated in the present embodiment, the document type options do not need to be document types which the document type determiner 115a can output. Accordingly, the user can set any document type options in the present embodiment.

In the present embodiment, document type options are set despite the fact that the document type determiner 115a is not generated. The reason for this is that, in a case where a document type can be called in multiple names, the large language model 116 is caused to return only one of the multiple names of the document type to eliminate inconsistency in the reply from the large language model 116. For example, "purchase order" and "order form" are type names representing the same document type. By including "order form" as a document type option and not including "purchase order" as a document type option, it is possible to prevent the reply from the large language model 116 from switching between "order form" and "purchase order".

Note that S2112 and S2113 are similar processes to S311 and S312 and S2114 to S2118 are similar processes to S314 to S318, and description thereof is therefore omitted. Since the document type determiner 115a is not generated in the present embodiment, the step of determining the document type based the output result from the document type determiner 115a is not performed.

### [Setting of Document Type Options by User]

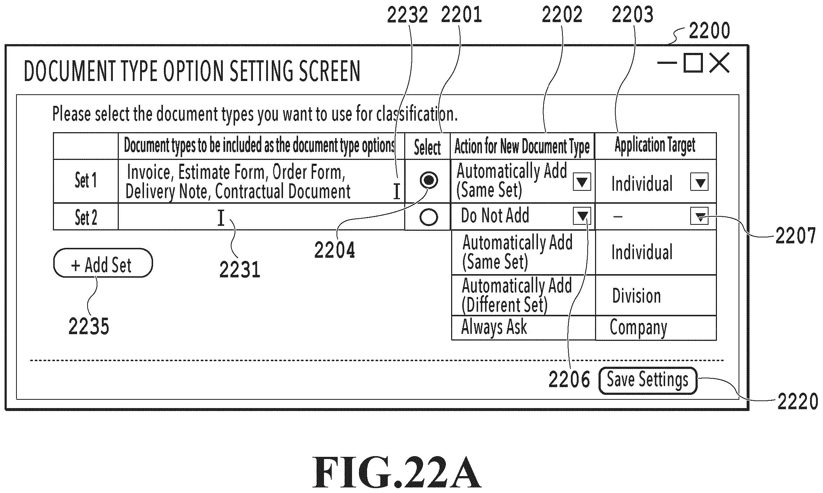

Fig. 22A is a diagram illustrating a document type option setting screen 2200 as an example of a screen for the user to set document type options in S2111. The following description will be given on the assumption that the document type option setting screen 2200 is displayed on the display device 210 of the image forming apparatus 101 via control by the CPU 261 of the information processing server 103. The CPU 261 functions also as a setting unit that document type options. The users can generate new document type options themselves on the document type option setting screen 2200, and edit the contents of the document type options set by the engineer in S2104.

In the document type option setting screen 2200, "sets" of document type options are displayed, and the user can select one of those sets. The document type options associated with "Set 1" in Fig. 22A represent the document type options set by the engineer in S2104.

A column 2201 includes radio buttons. For example, in a case where a radio button 2204 corresponding to "Set 1" is selected, the CPU 261 obtains "invoice", "estimate form", "order form", "delivery note", and "contractual document" associated with "Set 1" as document type options set by the user. The user does not necessarily have to change the document type options set by the engineer. In this case, the user may press the radio button 2204 under "Set 1" and press a save button 2220.

A button 2235 is a button for adding a set corresponding to new document type options. The document type option setting screen 2200 in Fig. 22A indicates a state where the button 2235 has been pressed, so that "Set 2" has been newly added. With an input cursor 2231, the user can input document types to be included as the document type options that are to be associated with "Set 2". Also, in a case where the user enables the radio button in the column 2201 corresponding to "Set 2" and presses the save button 2220, the CPU 261 obtains the newly generated set as document type options set by the user.

Suppose, for example, that the user wishes to perform the classification with three document types "order form", "delivery note", and "daily work report" instead of the five document types "invoice", "estimate form", "order form", "delivery note", and "contractual document" set by the engineer. In this case, the user may input "order form", "delivery note", and "daily work report" under "Set 2", select the radio button under "Set 2", and press the save button 2220. The method of adding new document type options is not limited. For example, the configuration may be such that a predefined set can be copied and generated or document types which have been set before can be suggested.

In a case where the user wishes to change the document type options set by the engineer, the user can move an input cursor 2132 to the region displaying the document types of "Set 1" and perform editing such as changing the displayed document types or adding document types. For example, the user can add "confirmation of receipt" to "Set 1" to set six document types "invoice", "estimate form", "order form", "delivery note", "contractual document", and "confirmation of receipt" as the document type options corresponding to "Set 1".

A column 2202 is a column for setting an action to be performed in response to emergence a new document type on a per set basis. The emergence of a new document type refers to a case where a document image of a new document type not included as a document type option (new document) is input as a processing target, and the user inputs the document type of that new document. Examples of the emergence of a new document type include a case where the user selects the cell 1042 with "confirmation of receipt" in the document type confirmation screen 1000 in Fig. 10B, which is a document type of a new document suggested by the large language model 116, and presses the OK button 1004.

In the present embodiment, "do not add", "automatically add (same set)", "automatically add (different set)", or "always ask" can be selected from a drop-down list as an action to be performed in response to emergence of a new document type. The drop-down list is displayed by pressing a list button 2106. In the present embodiment, "do not add" is set as a default action to be performed in response to emergence of a new document type.

The "do not add" is a setting item for not automatically adding the document type of a new document as a document type option even in a case where the document type of the new document is input.

Moreover, "automatically add (same set)" is a setting item for automatically adding the document type of a new document as a document type option in the set for which "automatically add (same set)" is set in a case where the document type of the new document is input.

Further, "automatically add (different set)" is a setting item for adding a new set in a case where the document type of a new document is input, adding the document type of the new document as a document type option in the set for which "automatically add (different set)" is set, and setting that document type option as a document type option in the added new set.

Furthermore, "always ask" is a setting item for, in a case where the document type of a new document is input, notifying the user of that effect and asking for an instruction from the user.

Suppose, for example, that "confirmation of receipt", which is a document type not included as a document type option in "Set 1 ", is input as the document type of a new document. In this case, the CPU 261 includes "confirmation of receipt" as a document type option in "Set 1", for which "automatically add (same set)" is set. Thus, the user can set whether to automatically add the document type of a new document as a document type option for each registered set.

A column 2203 is a column for setting the application target in a case where "automatically add" is set in the column 2202 on a per set basis. The automatic addition refers to "automatically add (same set)" or "automatically add (different set)". In the present embodiment, "individual", "division", or "company" can be selected as the application target of the automatic addition. As the application target, "individual" represents the users themselves, "division" represents the division to which the user belongs, and "company" represents the company to which the user belongs. In addition, the configuration may be such that a particular user can be designated as the application target, for example. In a case where "automatically add" is selected in the column 2202, "individual" is set by default, for example. The user can press a list button 2207 and select "individual", "division", or "company" as the application target from the displayed drop-down list.

In a case where the save button 2220 is pressed, the setting selected by the user on the document type option setting screen 2200 is transmitted to the information processing server 103.

### [Process of Displaying Document Type]

23 is a flowchart for describing a process of determining and displaying the document type of a document image, and is a flowchart according to the present embodiment corresponding to the flowchart of Fig. 5 in Embodiment 1.

In S2301, as in S501, processing is executed on a processing target document image using a machine learning model.

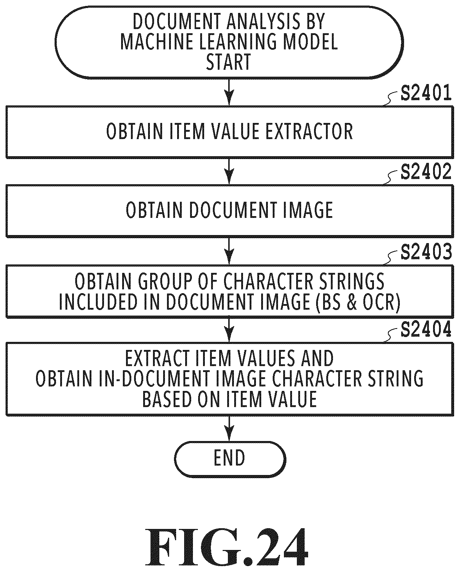

Fig. 24 is a flowchart describing details of the process of S2301, and is a flowchart according to the present embodiment corresponding to the flowchart of Fig. 6 in Embodiment 1.

Note that S2401 to S2403 and S2404 are similar processes to S602 to S604 and S606 in Fig. 6, respectively. That is, in the present embodiment, of the steps in the flowchart of Fig. 6, S601 and S605, which are a step of obtaining the document type determiner 115a and a step of determining the document type based on the output result from the document type determiner 115a, are not performed.

In S2302, which is a step corresponding to S502 in Fig. 5, the CPU 261 generates an instruction message and obtains a reply to the instruction message from the large language model 116 as an output result. In S2302, similar processes to those in the flowchart of Fig. 8 are performed except that, in S801 in Fig. 8, the CPU 261 obtains the document type options set by the user in S2111 in Fig. 21. In a case where the user has set no document type options in S2111, i.e., the user has set a default value, the CPU 261 obtains the document type options given by the engineer in S2104 in Fig. 21.

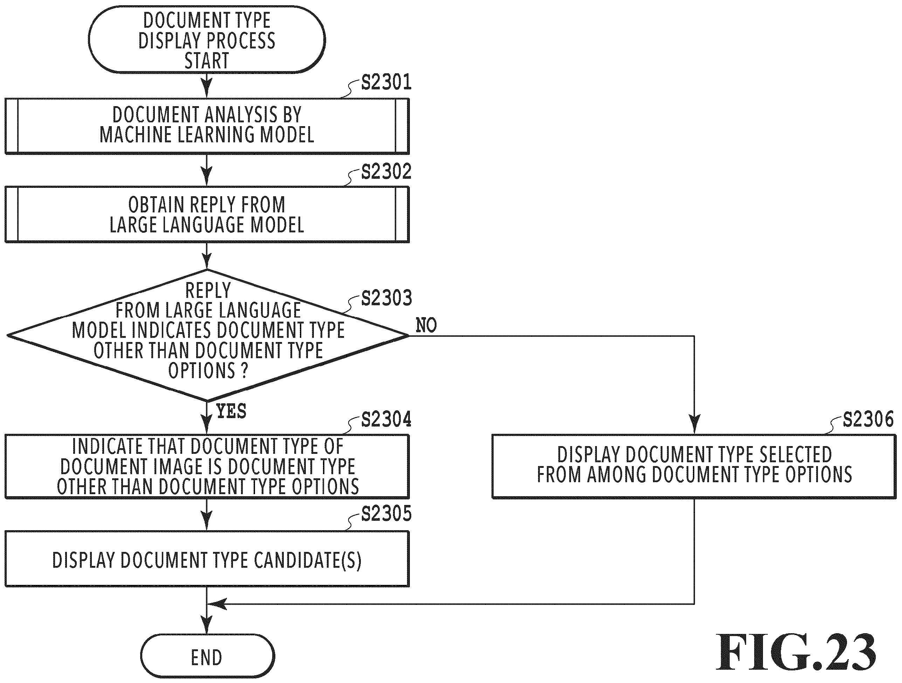

After S2302, the CPU 261 moves to S2303. The flowchart of Fig. 23 does not include a step corresponding to S503.

In S2303, the CPU 261 determines whether the reply to the instruction message obtained from the large language model 116 is a reply indicating that the document type of the processing target document image is none of the document types included as the document type options. In the case where the user has set document type options in S2111, the large language model 116 answers whether the document type of the processing target document image is a document type included as a document type option set in S2111 as a reply to the question 911.

If the large language model 116 replies that the document type of the processing target document image is a document type included as a document type option (NO in S2303), the CPU 261 advances the process to S2306.

In S2306, the CPU 261 performs a process of notifying the user of the document type returned by the large language model 116 from among the document type options. For example, in a case where the large language model 116 has returned a document type from among the document types included as the document type options as a reply to the question 911 in Fig. 9B or 9D, the CPU 261 generates a document type confirmation screen 1000 as illustrated in Fig. 10A in S2306. That is, the CPU 261 performs display control such that the document type returned by the large language model 116 from among the document type options will be displayed in the document type display region 1001 by default.

On the other hand, if the large language model 116 replies that the document type of the processing target document image is none of the document types included as the document type options (YES in S2303), the CPU 261 advances the process to S2304.

Note that S2304 and S2305 in Fig. 23 are similar processes to S505 and S506 in Fig. 5.

In S2304, the CPU 261 notifies the user that the document type of the processing target document image may be none of the document types included as the set document type options, for example, by displaying the alert 1016.

In S2305, in order that the document type candidate(s) presented by the large language model 116 will be displayed in the document type confirmation screen 1000, the CPU 261 outputs information of the document type candidate(s) to the display device 267.

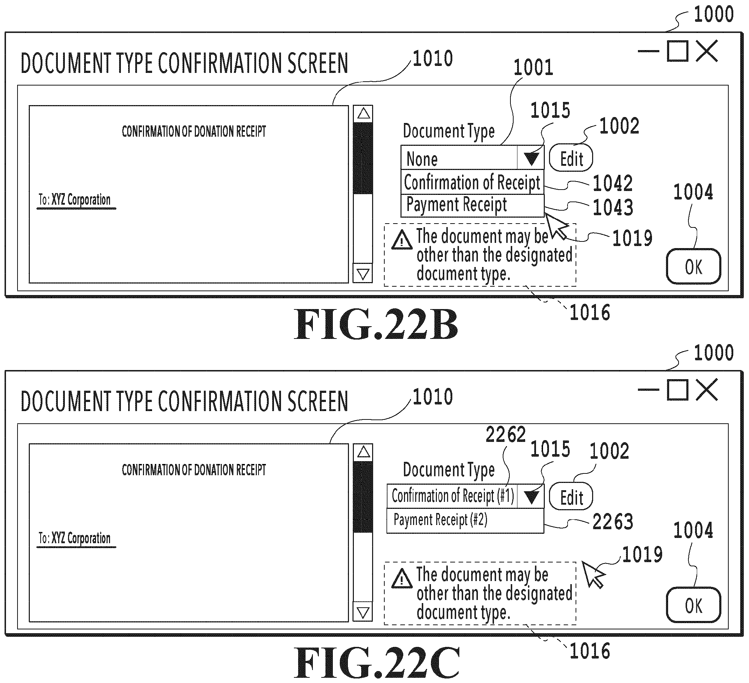

The document type confirmation screen 1000 in Fig. 22B represents an example of the document type confirmation screen in the case where "none" has been obtained as a reply to the question 911 from the large language model 116 and the CPU 261 determines YES in in S2303, as illustrated in Fig. 9E. In this case, the CPU 261 displays text "none", indicating that the document type of the processing target document image is none of the document types included as the document type options, in the document type display region 1001, as illustrated in Fig. 22B. The expression indicating that the document type of the processing target document image is none of the document types included as the document type options may be determined by the engineer or by the user. For example, as the expression indicating that the document type of the processing target document image is none of the document types included as the document type options, text indicating a similar expression, such as "other", may be used.

Also, if the reply to the question 911 is "none", a reply indicating a document type candidate(s) other than the document type options is obtained from the large language model 116 as a reply to the question 912. Suppose, for example, that a reply indicating "confirmation of receipt" and "payment receipt" is obtained as a candidate for the document type of the document image. In this case, as illustrated in Fig. 22B, a drop-down list is displayed under the document type display region 1001 in which "none" is displayed. Then, the document type candidates returned from the large language model 116 for the question 912, or "confirmation of receipt" and "payment receipt", may be displayed in the drop-down list.

The document type confirmation screen 1000 in Fig. 22C represents another example of the document type confirmation screen in the case where the CPU 261 determines YES in S2303. Fig. 22C represents an example screen which does not display "none" in a case where the large language model 116 replies that the document type of the processing target document image is none of the document types included as the document type options. In the document type confirmation screen 1000 in Fig. 22C, only pieces of text 2262 and 2263 indicating "confirmation of receipt" and "payment receipt", which are document type candidates with which the large language model 116 has replied to the question 912, are displayed. In the case of displaying the pieces of text 2262 and 2263 as document type candidates, they may be presented in the order in which they were listed by the large language model 116, in alphabetical order, or in descending order of the number of large language models that returned the same document type as described in Embodiment 3.

As described above, in the present embodiment, the document type determiner 115a is not generated, and the large language model 116 is caused to return the document type of a processing target document image. Also, in accordance with the present embodiment, the large language model 116 is caused to return an appropriate document type from among document type options freely set by the user. Moreover, in a case where the document type of the processing target document image is none of the document type options, the large language model 116 is caused to return a document type candidate(s). This reduces the time and effort for the user to correct the document type name.

Incidentally, as mentioned earlier, in a case where the "in-document image character string" is the entire group of character strings recognized from the document image, the item value extractor 115b, which is a machine learning model, does not need to be generated. In this case, no machine learning model needs to be generated in the present embodiment. Thus, the training apparatus 102 may be omitted in the configuration of the information processing system 100.

Also, in the present embodiment, the user can freely select document type options. For example, the user may cancel the document type options set by the engineer and choose not to set document type options. In this case, the instruction message to be generated by the information processing server 103 does not need to be an instruction message to be replied to with the document type of the processing target document image from among document type options. For example, as the instruction message in a case where the "in-document image character string" is "purchase order" and no document type options are set, an instruction message such as "return the document type of a document with a title "purchase order"" may be generated. As described above, an instruction message without defining the range of document types to be returned from the large language model 116 may be generated in S2302. In this case, the document type returned from the large language model 116 may be displayed in the document type display region 1001 in the document type confirmation screen 1000 by default.

In accordance with the present disclosure, it is possible to reduce the load of identifying the document type of a document image.

### <Other Embodiments>

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An information processing apparatus comprising:
a character recognition unit configured to perform a character recognition process on an image of a processing target document (154);
a generation unit configured to generate an instruction message based on a result of the character recognition process, the instruction message being a message for causing a large language model to reply a document type of the processing target document (155);
a transmission unit configured to transmit the instruction message in order to obtain a reply to the instruction message from the large language model (155, S316); and
a reception unit configured to receive the reply to the instruction message from the large language model (156).

2. The information processing apparatus according to claim 1, wherein
the generated instruction message is a message for causing the large language model to reply the document type of the document based on character strings obtained by the character recognition process.

3. The information processing apparatus according to claim 1 or 2, further comprising
an extraction unit configured to extract at least a character string corresponding to a predetermined item from among character strings obtained by the character recognition process, wherein
the generation unit generates the instruction message for causing the large language model to reply the document type of the processing target document based on the character string corresponding to the predetermined item.

4. The information processing apparatus according to claim 3, wherein the predetermined item is a title.

5. The information processing apparatus according to claim 3, wherein
the predetermined item includes a plurality of items.

6. The information processing apparatus according to any one of claims 3 to 5, wherein
the extraction unit extracts a character string corresponding to the predetermined item by inputting the character strings obtained by the character recognition process into a trained model, and
the generation unit generates the instruction message for causing the large language model to reply the document type of the processing target document based on the character string corresponding to the predetermined item.

7. The information processing apparatus according to any one of claims 1 to 6, wherein
the instruction message includes a first question for causing the large language model to answer whether the document type of the processing target document is one of a plurality of document types set in advance.

8. The information processing apparatus according to claim 7, wherein
the instruction message includes a second question for causing the large language model to reply a document type other than the plurality of document types as the document type of the processing target document in a case where the document type of the processing target document is none of the plurality of document types.

9. The information processing apparatus according to claim 8, wherein
the instruction message includes a third question for causing the large language model to reply a reason for the replies to the first question and the second question.

10. The information processing apparatus according to claim 8 or 9, further comprising
a determination unit configured to input a group of character strings obtained by the character recognition process into a trained model to determine the document type of the processing target document, wherein
the trained model is a trained model trained to output information indicating one of the plurality of document types.

11. The information processing apparatus according to claim 10, further comprising
a display control unit configured to display at least one of the document type determined by the determination unit or the document type received from the large language model on a display unit as the document type of the processing target document.

12. The information processing apparatus according to claim 11, wherein
in a case where a user designates correction of the displayed document type, the display control unit accepts the correction.

13. The information processing apparatus according to claim 12, wherein
the display control unit displays the document type determined by the determination unit on the display unit as the document type of the processing target document, and in a case where the large language model outputs a first document type being a document type other than the plurality of document types as the reply to the second question, displays the first document type on the display unit as a candidate for a corrected character string.

14. The information processing apparatus according to any one of claims 8 to 13, further comprising
a setting unit configured to set document types to be included as the plurality of document types.

15. The information processing apparatus according to claim 14, wherein
in a case where the large language model outputs a first document type being a document type other than the plurality of document types as the reply to the second question and a user selects the first document type as the document type of the processing target document, the setting unit sets the first document type as a document type included in the plurality of document types.

16. The information processing apparatus according to any one of claims 1 to 15, further comprising
a setting unit configured to set one or more large language models to be caused to reply to the instruction message, wherein
the transmission unit transmits the instruction message to the set one or more large language models.

17. An information processing method comprising:
performing a character recognition process on an image of a processing target document (S802);
generating an instruction message based on a result of the character recognition process, the instruction message being a message for causing a large language model to reply a document type of the processing target document (S804);
transmitting the instruction message in order to obtain a reply to the instruction message from the large language model (S805); and
receiving the reply to the instruction message from the large language model (S806).

18. A program for causing a computer to execute each units of the information processing apparatus according to any one of the claims 1 to 16.
